(19) **Europäisches Patentamt / European Patent Office / Office européen des brevets**

(11) **EP 3 357 618 A1**

(12) **EUROPEAN PATENT APPLICATION**
published in accordance with Art. 153(4) EPC

(43) Date of publication:
08.08.2018 Bulletin 2018/32

(21) Application number: 16851200.2

(22) Date of filing: 15.09.2016

(51) Int Cl.:
*B23C 3/32* (2006.01)      *B23C 5/10* (2006.01)
*B23C 5/12* (2006.01)      *B23F 15/08* (2006.01)
*F04C 18/16* (2006.01)      *F04C 29/00* (2006.01)

(86) International application number:
**PCT/JP2016/077300**

(87) International publication number:
**WO 2017/057026 (06.04.2017 Gazette 2017/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.09.2015 JP 2015189152**

(71) Applicant: **Mitsubishi Electric Corporation Chiyoda-ku Tokyo 100-8310 (JP)**

(72) Inventors:
• **NAKASUJI Tomoaki Tokyo 100-8310 (JP)**
• **KAWAKAMI Tetsuji Tokyo 100-8310 (JP)**
• **KAMIKAWA Masaaki Tokyo 100-8310 (JP)**
• **ITO Takeshi Tokyo 100-8310 (JP)**
• **WATANABE Isamu Tokyo 100-8310 (JP)**

(74) Representative: **Sajda, Wolf E. Meissner Bolte Patentanwälte Rechtsanwälte Partnerschaft mbB Postfach 86 06 24 81633 München (DE)**

(54) **SCREW ROTOR MACHINING METHOD, MACHINING DEVICE AND MACHINING TOOL, AND METHOD OF MANUFACTURING SCREW COMPRESSOR**

(57)    In a method of machining a screw rotor (1) to form a screw tooth-groove (2) by simultaneously controlling about a plurality of rotation axes for use in rotating a workpiece and turning a tool, the method includes a process step of drilling into a desired depth, a process step of performing rough machining of side-faces (41) of a screw tooth-groove (2), a process step of performing finish machining of side-faces (41) of a screw tooth-groove (2), and a process step of performing finish machining of a bottom-face (43) of a screw tooth-groove (2); and, at the finish machining process step on the bottom-face (43) of the screw tooth-groove (2), it is so arranged as to use an end mill (28) being provided with a cutting edge having, in its size, the quantity of axial depth of cut or more along a side-face of the end mill (28), which also has its front-end shape corresponding to a bottom-face of a screw tooth-groove (2) and has an outer periphery geometry less than or equal to a tool diameter capable of being inserted down to a groove bottom of the screw tooth-groove (2) in a maximum tooth-groove depth position.

EP 3 357 618 A1

Fig. 6

(a)

Fig. 6

(b)

Fig. 6

(c)

Fig. 6

(d)

**Description**

Technical Field

The present invention relates to a method and a device for more accurately and more efficiently performing tooth-groove machining of a screw rotor assembled in a single screw compressor and to machining tools for use in performing machining of the screw rotor, and also to a method of manufacturing a screw compressor.

Background Art

Tooth-groove machining of a screw rotor assembled in a single screw compressor is, conventionally, performed by means of a method for forming a tooth-groove shape by setting a workpiece material subjected to machining on a first rotation axis, by setting a tool on a second turning axis perpendicular to the first rotation axis, and by rotating and turning them about these two axes in synchronization with each other and by further increasing a turning radius of the tool being set on the second turning axis, concurrently with the progress of machining and finely on a little-by-little basis.

As for process steps in the method, it can be roughly divided into three process steps of a process step of drilling in a groove shape as rough machining, a process step of finishing groove side-faces, and a process step of finishing a groove bottom-face. In both of Patent Document 1 and Patent Document 2, the rough machining of a groove is performed by a rotating tool of an end mill or the like. The groove side-face finish machining is performed by means of a special end mill tool whose neck portion is narrowed in Patent Document 1 and by means of an end mill tool whose tool diameter is smaller than a sealing radius of a gate rotor in Patent Document 2, and is performed by rotating the tools each in the both.

However, as for the groove bottom-face finish machining, it is difficult to obtain good machining accuracy by a rotating tool, and thus, in both of Patent Documents 1 and 2, groove bottom geometry or shape is formed by means of shaving machining in which a shaving bit tool having the same shape as a tip or front-end shape of a gate rotor is used, without rotating the tool.

Related Art Documents

Patent Documents

Patent Document 1: Japanese Patent Publication JP 4 659 847 b2
Patent Document 2: International Publication No. 2009/028127

Summary of the Invention

Problems to be Solved by the Invention

As described above, in the tooth-groove machining of a screw rotor, only a groove bottom-face undergoes shaving machining using a specially shaped tool. In order to prevent the interference at points other than cutting points, this special tool is required to be manufactured in following with a product shape(s), so that manufacturing of the tool is complex. In addition, because of the special shape, it is easy to cause coordinates errors of an angle or a tool length in setting of tool cutting-edge position, so that the correction through dummy machining and/or an adjustment jig are required.

Moreover, because shaving machining is implemented in which a workpiece material subjected to machining and a tool move in synchronization with each other, a relative speed between the workpiece material subjected to machining and the tool becomes a cutting speed, so that there arise problems in that high-speed performance cannot be expected, and machining efficiency cannot be enhanced.

The present invention has been directed at solving these problems described above, and an object of the invention is to provide a method, a machining device and machining tools for enhancing machining efficiency, in the tooth-groove machining of a screw rotor, especially in tooth-groove bottom-face machining where the machining is not achieved by a rotating tool.

Means for Solving the Problems

A method of machining a screw rotor according to the present invention comprises:

a first process step for drilling in a depth direction of a screw-rotor's screw tooth-groove to be by giving a constant depth of cut to a depth being determined in advance, by using a first end mill;

a second process step for performing rough machining of side-faces of a screw tooth-groove, by using a second end mill having a diameter smaller than a groove width of the screw tooth-groove;

a third process step for performing finish machining of side-faces of a screw tooth-groove, by using a third end mill being furnished with a cutting-edge portion shorter than a depth size of the screw tooth-groove and with a neck portion having a smaller diameter than a diameter of the cutting-edge portion; and

a fourth process step for performing finish machining of the bottom-face of a screw tooth-groove, by using a fourth end mill having a shape associated with a bottom-face of the screw tooth-groove and also having an outer diameter less than or equal to a tool diameter capable of being inserted to a groove bottom of the screw tooth-groove, and being provided with a cutting-edge having a quantity of axial depth of cut or more along a side-face of the fourth end mill.

Another method of machining a screw rotor according to the present invention comprises:

a first process step for drilling in a depth direction of a screw-rotor's screw tooth-groove to be by giving a constant depth of cut to a depth being determined in advance, by using a first end mill;

a second process step for performing rough machining of side-faces of a screw tooth-groove, by using a second end mill having a diameter smaller than a groove width of the screw tooth-groove;

a third process step for performing finish machining of side-faces of a screw tooth-groove, by using a third end mill being furnished with a cutting-edge portion shorter than a depth size of the screw tooth-groove and with a neck portion having a smaller diameter than a diameter of the cutting-edge portion; and

a fourth process step for performing finish machining of the bottom-face of a screw tooth-groove, by using a fourth end mill having a shape associated with a bottom-face of the screw tooth-groove and also having an outer diameter less than or equal to a tool diameter capable of being inserted to a groove bottom of the screw tooth-groove, and being provided with a cutting edge having a quantity of axial depth of cut or more along a side-face of the fourth end mill, and by using a fifth end mill having a tool diameter still smaller than that of the fourth end mill, and being provided with a cutting edge having a quantity of axial depth of cut or more along a side-face of the fifth end mill.

In addition, a device of machining a screw rotor according to the present invention comprises:

a first end mill placed on a tool turning axis, for drilling in a depth direction of a screw-rotor's screw tooth-groove to be by giving a constant depth of cut to a depth being set in advance;

a second end mill having a diameter smaller than a groove width of a screw tooth-groove, being placed on the tool turning axis, for performing rough machining of side-faces of the screw tooth-groove;

a third end mill being furnished with a cutting-edge portion shorter than a depth size of a screw tooth-groove and with a neck portion having a smaller diameter than a diameter of the cutting-edge portion, being placed on the tool turning axis, for performing finish machining of side-faces of the screw tooth-groove; and

a fourth end mill having a shape associated with a bottom-face of a screw tooth-groove, being placed on the tool turning axis, for performing finish machining of the bottom-face of the screw tooth-groove; the device of machining the screw rotor is characterized in that

the fourth end mill has an outer diameter less than or equal to a tool diameter capable of being inserted to a groove bottom of the screw tooth-groove and also has a cutting edge with a quantity of axial depth of cut or more along a side-face of the fourth end mill, and performs finish machining of the screw tooth-groove.

Moreover, tools for use in machining a screw rotor according to the present invention comprise:

a first end mill for drilling in a depth direction of a screw-rotor's screw tooth-groove to be by giving a constant depth of cut to a depth being set in advance;

a second end mill whose diameter is smaller than a groove width of a screw tooth-groove, for performing rough machining of side-faces of the screw tooth-groove;

a third end mill being furnished with a cutting-edge portion shorter than a depth size of a screw tooth-groove and with a neck portion having a smaller diameter than a diameter of the cutting-edge portion, for performing finish machining of side-faces of the screw tooth-groove; and

a fourth end mill having a shape associated with a bottom-face of a screw tooth-groove and an outer diameter less than or equal to a tool diameter capable of being inserted to a groove bottom of the screw tooth-groove, and also being provided with a cutting edge having a quantity of axial depth of cut or more along a side-face of the fourth end mill, for performing finish machining of the bottom-face of the screw tooth-groove; the tools for use in machining the screw rotor are characterized in that
the first end mill, the second end mill, the third end mill and the fourth end mill are sequentially used for forming the screw tooth-groove.

Furthermore, a method of manufacturing a screw compressor according to the present invention comprises:

a first assembly step of forming a screw rotor by machining a plurality of screw tooth-grooves each by means of the following steps:

drilling in a depth direction of a screw-rotor's screw tooth-groove to be by giving a constant depth of cut to a depth determined in advance, by using a first end mill;
performing rough machining of side-faces of a screw tooth-groove, by using a second end mill whose diameter is smaller than a groove width of the screw tooth-groove;
performing finish machining of the side-faces of a screw tooth-groove, by using a third end mill being furnished with a cutting-edge portion shorter than a depth size of the screw tooth-groove and with a neck portion having a smaller diameter than a diameter of the cutting-edge portion; and
performing finish machining of a bottom-face of a screw tooth-groove, by using a fourth end mill having a shape associated with the bottom-face of the screw tooth-groove, being provided with a cutting edge having a quantity of axial depth of cut or more along a side-face of the fourth end mill, and having an outer diameter less than or equal to a tool diameter capable of being inserted to a groove bottom of the screw tooth-groove;

a second assembly step of disposing the gate rotors on outer radial sides of the screw rotor so that the plurality of screw tooth-grooves of the screw rotor is individually made axially perpendicular to a plurality of teeth of two gate rotors with each other; and
a third assembly step of covering an outer circumferential portion of the screw rotor and those of the gate rotors by an enclosure, whereby
the screw compressor is structured to seal a compression medium therein by closing the plurality of screw tooth-grooves by means of the gate rotors rotating together with the screw rotor concurrently with its rotation.

Effects of the Invention

In the present invention, because a rotating tool is utilized for finish machining of a tooth-groove bottom-face(s), the number of revolutions can be heightened up to a level equivalent to ordinary end mill machining, and it is no more required to use a specially shaped shaving bit, so that more efficient machining can be achieved. In addition, because the rotating tool is a rotationally symmetrical tool, the measurement of a cutting-edge position becomes easier in comparison with a specially shaped shaving bit, so that the accuracy of a tooth-groove depth is enhanced. In comparison with a specially shaped shaving bit, there exists an effect in which manufacturing of a tool is made simpler or the like.

Brief Description of Drawings

| FIG. 1 | is a perspective diagram illustrating compression principles of a single screw compressor; |
| FIG. 2 | is a cross-sectional view taken from the dashed dotted line C-C' of FIG. 1; |
| FIG. 3 | is a diagram illustrating an apparatus configuration of a screw rotor machining device; |
| FIG. 4 | is an illustrative diagram for explaining axial movements at a time of screw rotor machining; |
| FIG. 5 | is a flowchart illustrating machining process steps of a screw rotor in Embodiment 1; |
| FIGS. 6(a), 6(b), 6(c) and 6(d) | are model diagrams each illustrating a machining process step of a screw rotor in Embodiment 1; |
| FIG. 7 | is a front view of a tapered end mill for use in rough machining; |
| FIG. 8 | is a diagram illustrating the relationship between a tooth-groove rotation radius and a tooth rotation radius at a tooth-groove depth; |
| FIG. 9 | is a diagram illustrating changes in lead angles at the tooth-groove |

depth;

| | |
|---|---|
| FIG. 10 | is a diagram for explaining an error at a tooth-groove side-face in end mill machining; |
| FIG. 11 | is a schematic diagram illustrating errors at a tooth-groove side-face in end mill machining; |
| FIG. 12 | is a front view of a third end mill for use in tooth-groove side-face finish machining; |
| FIG. 13 | is a front view showing the relationship between lead and a tool position at a time of tooth-groove side-face finish machining; |
| FIG. 14 | is an illustrative diagram for explaining an axial position of depth of cut at the time of tooth-groove side-face finish machining; |
| FIG. 15 | is a front view showing an example of an end mill for use in tooth-groove bottom-face finishing according to Embodiment 1; |
| FIG. 16 | is a diagram for explaining a manner to set a cutting diameter of the end mill for use in tooth-groove bottom-face finishing according to Embodiment 1; |
| FIGS. 17(a), 17(b) and 17(c) | are illustrative diagrams each for explaining a cutting pass of tooth-groove bottom-face finish machining according to Embodiment 1; |
| FIG. 18 | is a diagram for explaining tooth-groove bottom-face shapes in tooth-groove bottom-face finish machining according to Embodiment 1; |
| FIG. 19 | is a diagram for explaining quantities of tooth-groove bottom-face correction in tooth-groove bottom-face finish machining according to Embodiment 1; |
| FIG. 20 | is a flowchart illustrating machining process steps of a screw rotor in Embodiment 2; |
| FIGS. 21(a), 21(b), 21(c), 21(d), 21(e) and 21(f) | are model diagrams each illustrating a machining process step of a screw rotor in Embodiment 2; |
| FIG. 22 | is a diagram for explaining tooth-groove bottom-face shapes after tooth-groove bottom-face rough machining according to Embodiment 2; |
| FIG. 23 | is a diagram for explaining tooth-groove bottom-face errors in geometry in tooth-groove bottom-face finish machining according to Embodiment 2; |
| FIG. 24 | is a diagram for explaining tooth-groove bottom-face errors in geometry in other tooth-groove bottom-face finish machining according to Embodiment 2; |
| FIG. 25 | is a front view showing another example of an end mill for use in tooth-groove bottom-face finishing according to Embodiments 1 and 2; |
| FIG. 26 | is a diagram for explaining tooth-groove bottom-face shapes after turning radius correction in tooth-groove bottom-face finish machining according to Embodiment 1; |
| FIG. 27 | is an illustrative diagram for explaining tooth-groove bottom-face positions in tooth-groove bottom-face finish machining according to Embodiment 1; |
| FIG. 28 | is a diagram for explaining tooth-groove bottom-face shapes after turning radius correction at a time of reciprocating machining in tooth-groove bottom-face finish machining according to Embodiment 1; |
| FIG. 29 | is a diagram for explaining tooth-groove bottom-face shapes after turning radius offset ($\phi 8$) in tooth-groove bottom-face finish machining according to Embodiment 2; |
| FIG. 30 | is a diagram for explaining tooth-groove bottom-face shapes after turning radius offset ($\phi 6$) in tooth-groove bottom-face finish machining according to Embodiment 2; |
| FIG. 31 | is a flowchart illustrating machining process steps of a screw rotor in Embodiment 3; |
| FIGS. 32(a) and 32(b) | are model diagrams each illustrating a machining process step of a screw rotor in Embodiment 3; |

FIG. 33 is a diagram illustrating a type of an end mill whose tips are replaceable for use as a third end mill in tooth-groove side-face finish machining according to Embodiment 3;

FIG. 34 is an illustrative diagram for explaining a control method of tooth-groove bottom-face finish machining according to Embodiment 3; and

FIG. 35 is a diagram for explaining a tooth-groove bottom-face shape after the control of tooth-groove bottom-face finish machining according to Embodiment 3.

Embodiments for carrying out the Invention

Embodiment 1

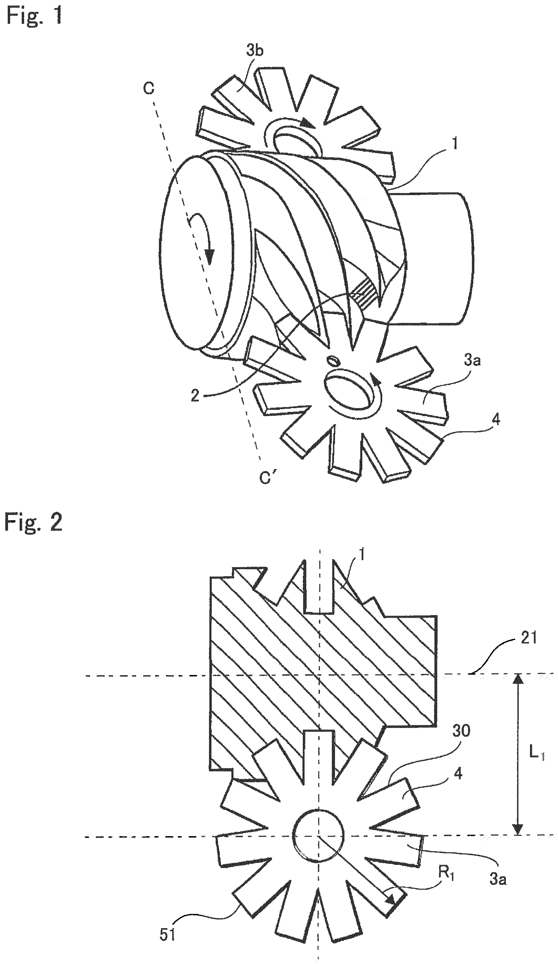

In the first place, the explanation will be made referring to FIG. 1 for compression principles of a single screw compressor. The single screw compressor includes a screw rotor 1 having a plurality of tooth grooves 2 and a plurality of teeth 4, where gate rotors 3a and 3b being engaged with the screw rotor 1 are disposed symmetrically with respect to the right and left thereof at positions axially perpendicular to each other. In FIG. 1, the diagram is illustrated for a case in which the screw rotor 1 has six of the tooth grooves 2, and the gate rotors 3a and 3b each have eleven of the teeth 4. A casing (not shown in the figure) covers an outer circumferential portion of the screw rotor 1, and sealed spaces are formed by the tooth grooves 2 of the screw rotor 1, the teeth 4 of the gate rotors 3a and 3b, and an inner diameter of the casing. A refrigerant gas being a compression medium is taken into the tooth grooves 2 at certain positions of the screw rotor 1, and the tooth grooves 2 are closed by means of the gate rotors 3a and 3b rotating together with the screw rotor 1 concurrently with its rotation, so that the refrigerant gas is sealed.

In addition, when the screw rotor 1 rotates, a tooth groove volume of each of sealed spaces formed by the tooth grooves 2 of the screw rotor 1, the teeth 4 of the gate rotors 3a and 3b, and the casing is reduced in its volume, so that the refrigerant gas is compressed. Further, when the screw rotor 1 rotates and a predetermined tooth groove volume is reached, a compressed refrigerant gas is discharged from an opening portion. By repeating this cycle in each of the tooth grooves, the compression is continuously performed. Note that, a cross-sectional view taken from the dashed dotted line C-C' of FIG. 1 is given in FIG. 2, which shows the situation in that the tooth 4 of the gate rotor 3a engages with the tooth-groove 2 of the screw rotor 1 (a casing is not shown in the figures).

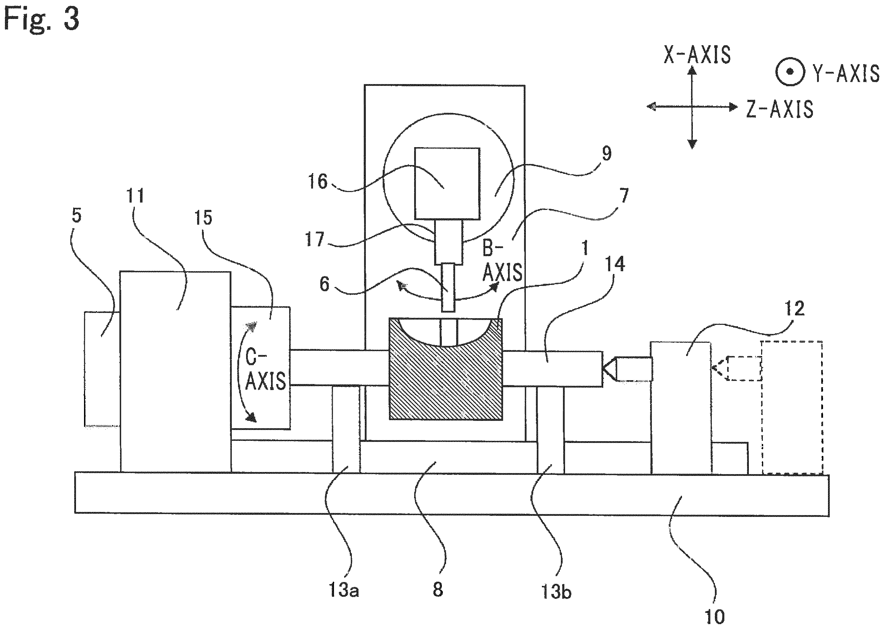

Next, the explanation will be made referring to an apparatus configuration of FIG. 3 for a machining device which machines the screw rotor 1. The machining device is an NC device capable of driving about five axes according to a C-axis spindle 5 for rotating the screw rotor 1 being a workpiece, an X-axis (vertically upward and downward directions) movable stage 7 for moving a tool 6 in a direction perpendicular to the C-axis described above, a Z-axis (laterally left- and right-hand directions) movable stage 8 for moving the tool 6 in a direction parallel with the C-axis described above, a Y-axis movable stage (not shown in the figure) for a direction perpendicular to both the axes of X- and Z-axis described above, and a B-axis turntable 9 which can turn the tool 6 centering the B-axis in the direction along the arrows of the figure. Upon a bed 10, placed are a C-axis spindle headstock 11 on which the C-axis spindle 5 is attached, the Z-axis movable stage 8, a movable tailstock 12, and steady braces 13a and 13b.

Here, the screw rotor 1 is fixed on the C-axis spindle 5 by a C-axis chuck 15 through a shaft 14; however, when more accurate machining is performed, it is so arranged that the shaft is supported by the tailstock 12 and the steady braces 13a and 13b in order to mitigate distortion due to a load at the time of machining. Upon the Z-axis movable stage 8, the X-axis movable stage 7, the Y-axis movable stage (not shown in the figure) and the B-axis turntable 9 are mounted, and, upon the B-axis turntable 9, a spindle 16 is mounted to rotate a tool 6; and, at a front end of the spindle, the tool 6 is attached by means of a holder 17 intervening therebetween.

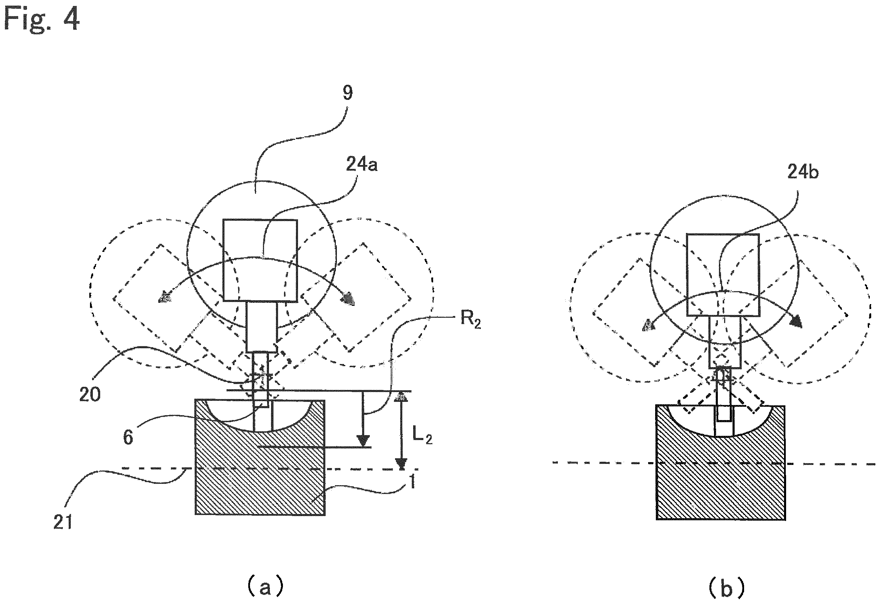

Next, the explanation will be made referring to FIG. 4 for machining principles in the machining device described above. As for machining of the tooth groove 2 of the screw rotor 1, the machining is performed by so to speak replacing the tooth 4 of the gate rotor 3 having been explained for the compression principles to the tool 6. Namely, the screw rotor 1 is rotated by the C-axis spindle 5 described above, and the tool 6 is turned by the B-axis turntable 9 while being synchronized with the rotation of the screw rotor 1. In order to obtain the screw rotor 1 illustrated in FIG. 1 and FIG. 2, the machining is performed so that a rotation-turning ratio between the rotation of the screw rotor 1 about the C-axis and the turning of the tool 6 about the B-axis is set, for example, at 6 : 11, respectively, to achieve the synchronization with each other. Moreover, the distance $L_2$ between a turning center 20 of the tool 6 and a rotational center 21 of the screw rotor 1 corresponds to a center-to-center distance $L_1$ of the screw compressor (refer to FIG. 2), and a turning radius $R_2$ of the tool 6 corresponds to a gate rotor's radius $R_1$ (refer to FIG. 2).

As illustrated in FIGS. 4(a) and 4(b), the driving control is performed in such a manner that, at the time of drilling the tooth groove 2, the turning radius $R_2$ of the tool 6 is consecutively altered without altering the turning center 20 of the tool 6 from a state in FIG. 4(a), so that a final radius reaches the same as a gate rotor's radius $R_1$, and that a central position of the B-axis turntable 9 moves on circular arc trajectories 24a and 24b by means of the X-axis movable stage 7 and the Z-axis movable stage 8 (refer to FIG. 4(b)). It is suitable that corrective control is performed on the displacement from the midline of the screw rotor 1 along the Y-axis of the machining device.

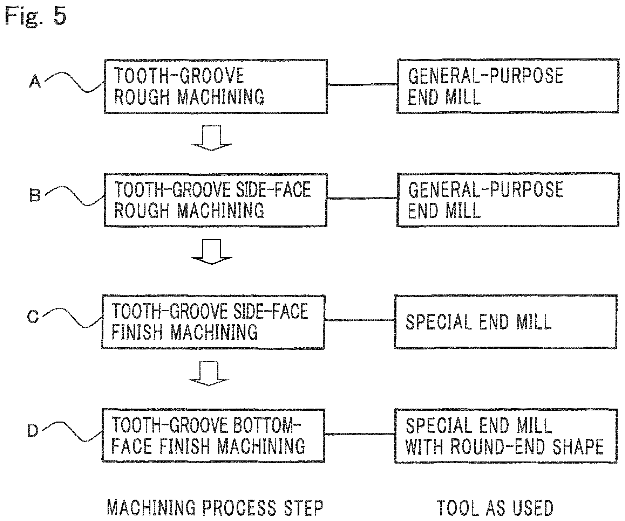

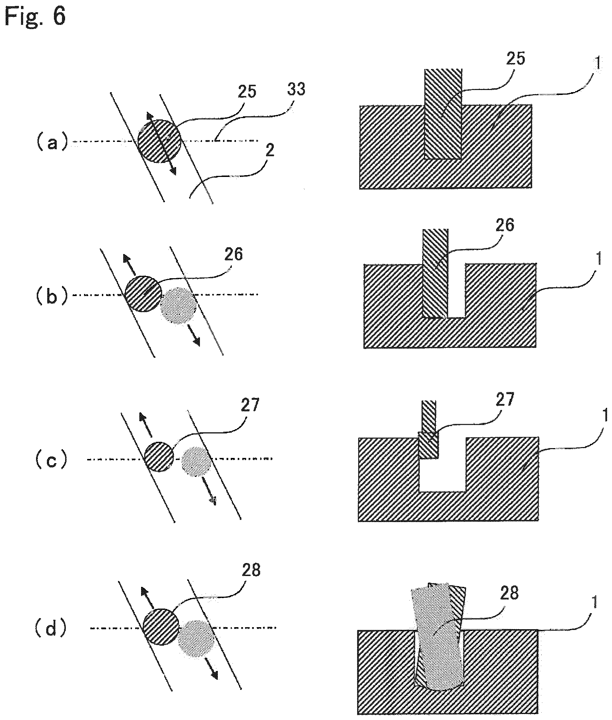

Next, the explanation will be made referring to FIG. 5, and FIGS. 6(a), 6(b), 6(c) and 6(d) for process steps for machining the tooth groove 2 of the screw rotor 1 using the machining device described above in conjunction with tools used therefor. A machining host material of the screw rotor 1 is made in a column shape of a solid-body or hollow-body. The explanation will be made for a case in which the rotational center 21 of the screw rotor 1 and a sealing line for sealing a refrigerant gas being a compression medium by the screw rotor and by the gate rotors are in coincidence with each other.

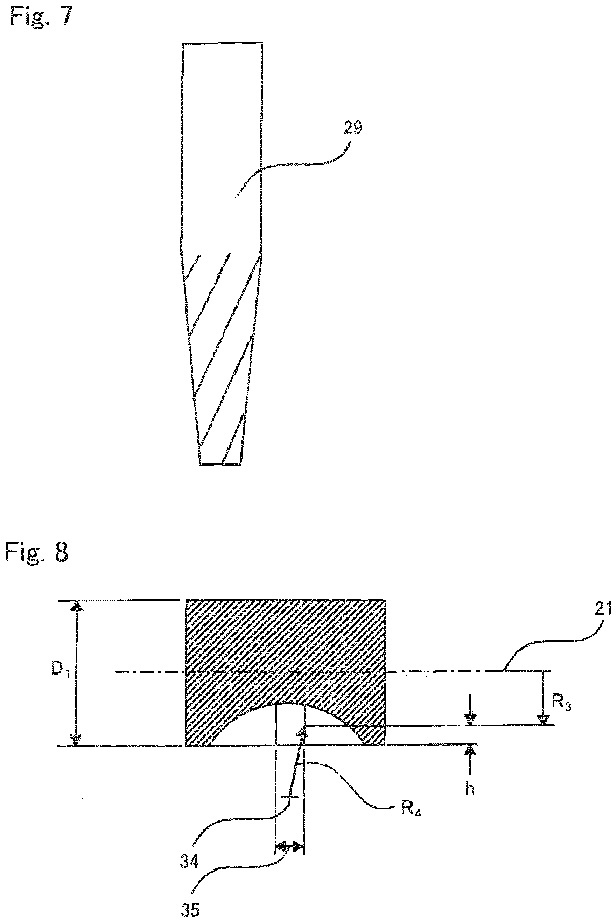

First, a first end mill 25 is turned as a tool, so that rough machining of the tooth groove 2 is performed. At the rough machining process step (Step A), both sides of the tooth groove 2 are simultaneously machined by means of groove cutting by the first end mill 25 which is associated with a required tooth-groove shape, and drilling is achieved down to a required depth by giving a depth of cut at a constant value in a tooth-groove depth direction (refer to FIG. 6(a)). At this time, a machining time of a following process step(s) is shortened when a tool is used whose diameter is nearer to a required tooth-groove shape as much as possible. In addition, the shape still nearer to a required one is formed by using a tapered end mill 29 whose front end is narrowed as shown in FIG. 7, so that reduction of the time can be further achieved. By making a machining host material of a hollow-body, a screw rotor in which a rotational axle is inserted therein may be utilized.

Next, side-face rough machining of the tooth groove 2 is performed by a general-purpose second end mill 26 smaller than a groove width of a screw tooth-groove (refer to FIG. 6(b)). At the tooth-groove side-face rough machining process step (Step B), the tooth groove 2 is machined so that its groove width is extended on one side on a one-by-one basis, and so machining accuracy is enhanced. By individually giving a depth of cut in two directions of a tooth-groove depth direction and a tooth-groove width direction, the machining is performed by a plurality of times of driving. As illustrated in FIG. 1 and FIG. 2, because the tooth groove 2 of the screw rotor 1 seals a refrigerant gas together with tooth side-faces 30 of a gate rotor 3, it is ideal when shapes of the tooth side-faces 30 of the gate rotor 3 are the same as side-face shapes of the tooth groove 2 of the screw rotor 1.

FIG. 8 shows the relationship between a tooth-groove side-face rotation radius $R_3$ and a tooth side-face rotation radius $R_4$ at a predetermined tooth-groove depth h: in the figure, a surface perpendicular to the rotational center 21 of the screw rotor 1 and a surface perpendicular to the rotational center 34 of the gate rotor 3 have the relationship mutually orthogonal to each other; a screw rotor's diameter D1 corresponds to an outer diameter of the screw rotor on the former surface; and a tooth-groove width 35 corresponds to a groove width on a sealing surface.

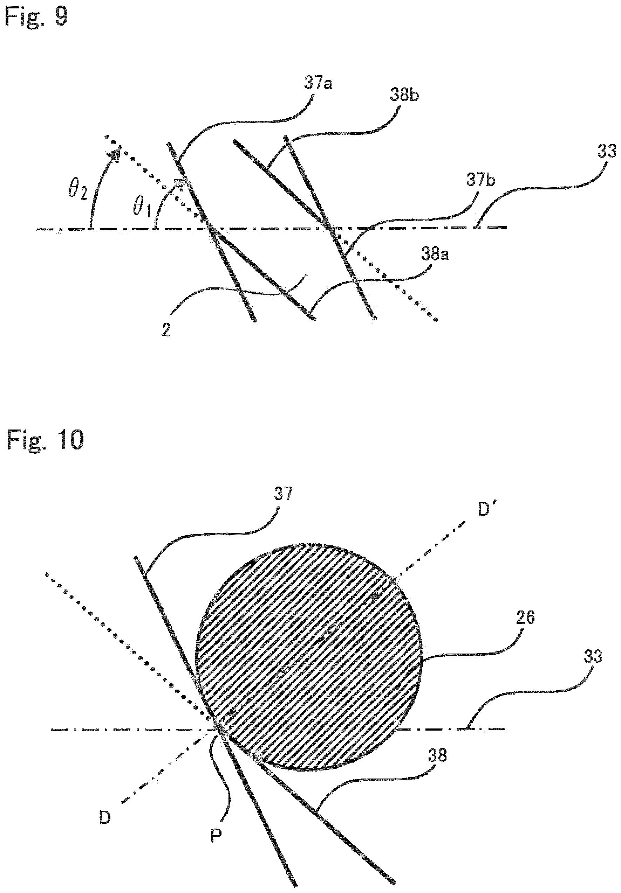

In addition, FIG. 9 is a diagram illustrating changes in lead angles at the tooth-groove depth; symbols 37a and 37b each depict lead (part thereof) on an outer periphery surface of the screw rotor 1, and symbols 38a and 38b each, lead (part thereof) at a tooth-groove bottom portion.

From the compression principles as shown in FIG. 8 and FIG. 9, the tooth-groove side-face rotation radius $R_3$ at a groove's depth position and a tooth side-face rotation radius $R_4$ at a groove's depth position differ depending on the tooth-groove depth positions, and so, a lead angle of the tooth groove 2 differs depending on a tooth-groove depth. Namely, because the tooth-groove side-face rotation radius $R_3$ becomes larger on an outer periphery surface of the screw rotor 1 and a tooth side-face rotation radius $R_4$ becomes smaller thereon, a lead angle $\theta_1$ on the outer periphery surface becomes larger; on the contrary, because the tooth-groove side-face rotation radius $R_3$ becomes smaller at the bottom of the tooth groove 2 and the tooth side-face rotation radius $R_4$ becomes larger thereat, a lead angle $\theta_2$ at the tooth-groove bottom becomes smaller.

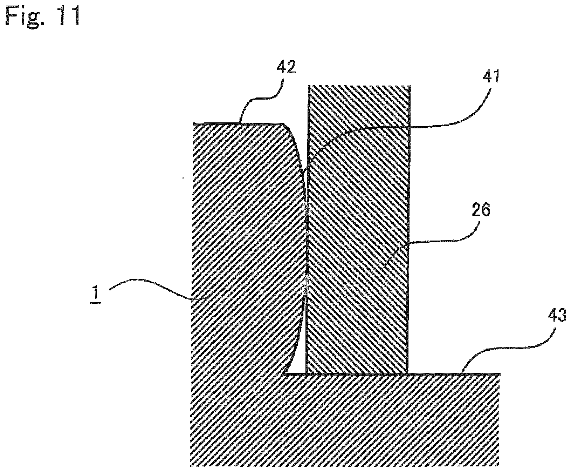

FIG. 10 is a diagram for explaining an error at a tooth-groove side-face in end mill machining; as shown in the figure, the distance to an outer circumference of the second end mill 26 from an intersection point P between lead 37 on an outer periphery surface and lead 38 at a tooth-groove bottom portion takes on a maximum form error, so that the form error at the tooth-groove side-face is further reduced when a tool diameter is made smaller. FIG. 11 depicts form errors at a tooth-groove side-face in the cross-sectional view taken from the dashed dotted line D-D' of FIG. 10; a tooth-groove side-face 41, an outer periphery surface 42 and a tooth-groove bottom-face 43 indicate the surfaces of the screw rotor 1.

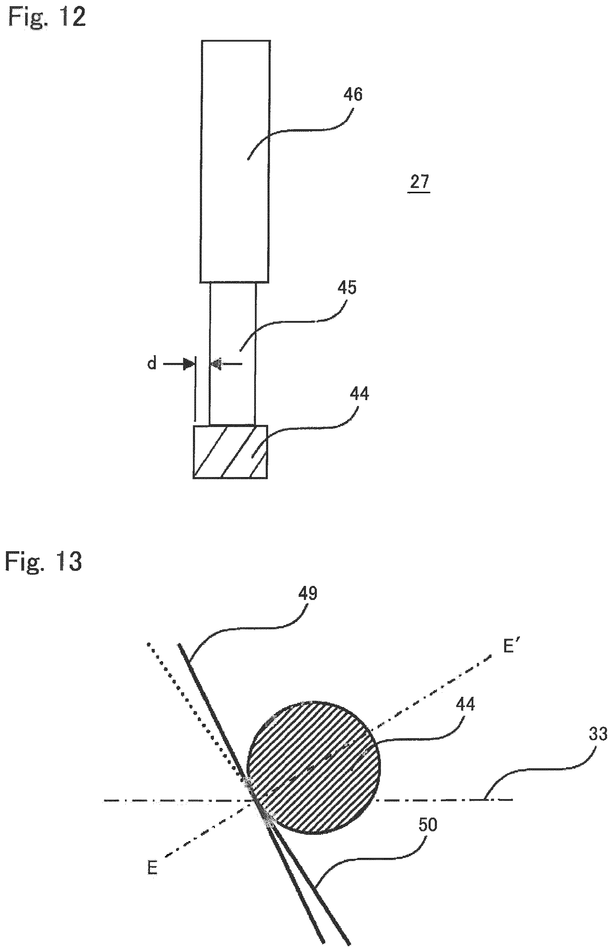

Subsequently, finish machining of tooth-groove side-faces (Step C) is performed by the specially shaped third end mill 27 (refer to FIG. 6(c)). An example of a shape of the third end mill 27 is shown in FIG. 12. The third end mill 27 is constituted of a cutting-edge portion 44, a neck portion 45 and a shank portion 46, and is special in features in which the cutting-edge portion 44 is shorter than a tooth-groove depth in comparison with the second end mill 26, and the neck portion 45 is provided to have a smaller diameter than a diameter of the cutting-edge portion 44. Here, the quantity of dent d is made to be a half of the difference between the diameter of the cutting-edge portion 44 and the diameter of the neck portion 45. The quantity of dent d can be acquired by next Expression (1).

Expression Figure-1

$$\text{Quantity of Dent } d \ \geq \ \text{Tool Radius } - \text{ Tool Radius } \times \frac{\cos(\delta c - (\delta a + \delta b)/2)}{\cos((\delta b - \delta a)/2)} \qquad (1)$$

Where, symbol "$\delta a$" designates a tooth-groove side-face lead angle at a tooth bottom position in a maximum tooth-groove depth position;
symbol "$\delta b$" designates a tooth-groove side-face lead angle at a position upward from a groove bottom by a quantity of a cutting-edge length in the maximum tooth-groove depth position; and
symbol "$\delta c$" designates a tooth-groove side-face lead angle at an outer periphery surface position in the maximum tooth-groove depth position.

In addition, the tooth-groove side-face rotation radius $R_3$ at a predetermined tooth-groove depth position and a tooth side-face rotation radius $R_4$ at the predetermined tooth-groove depth position are acquired from a center-to-center distance $L_1$ and the tooth-groove width 35 which are product specifications of a screw rotor compressor, and, from those parameters and a rotation ratio between a screw rotor and a gate rotor, a lead angle at each point of screw rotor's tooth-groove side-face can be acquired by next Expression (2).
Expression Figure-2

$$\text{Lead Angle at Each Point } = \ \tan^{-1} \frac{R_3}{R_4} \ \times \ \text{Rotation Ratio} \qquad (2)$$

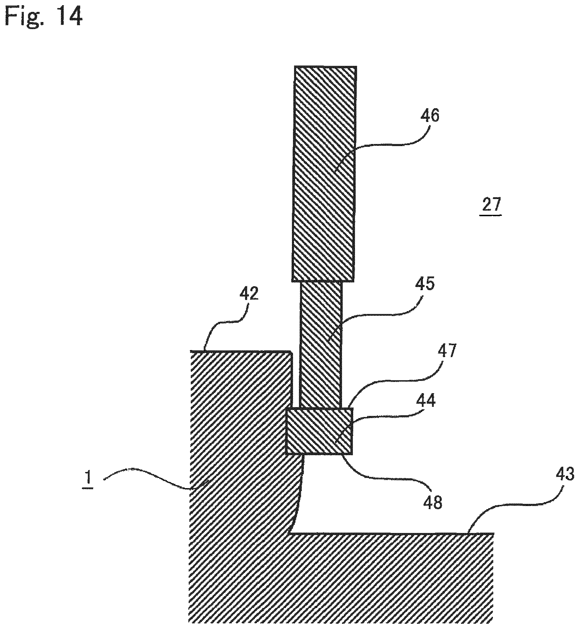

The explanation will be made for a cutter or cutting pass using the third end mill 27. FIG. 13 is a diagram illustrating the relationship between lead and a tool position at the time of tooth-groove side-face machining in third end mill machining; FIG. 14 is a diagram for explaining an axial position of depth of cut in a cross-section taken from the dashed dotted line E-E' of FIG. 13. That is to say, the machining is divided in a tooth-groove depth direction by a length corresponding to that of the cutting-edge portion 44 of the third end mill 27 described above, and a cutting pass is defined to move a turning center of the third end mill 27 described above so that an outer circumferential cylindrical-shaped portion of the cutting edge portion 44 described above makes contact with both leads of a cutting-edge portion's upper-part lead 49 generated on the screw rotor at a tooth-groove depth where machining is performed at a position of an upper part 47 of the aforementioned cutting -edge portion, and of a cutting-edge portion's lower-part lead 50 generated on the screw rotor at a tooth-groove depth where machining is performed at a position of an lower part 48 of the aforementioned cutting-edge portion.

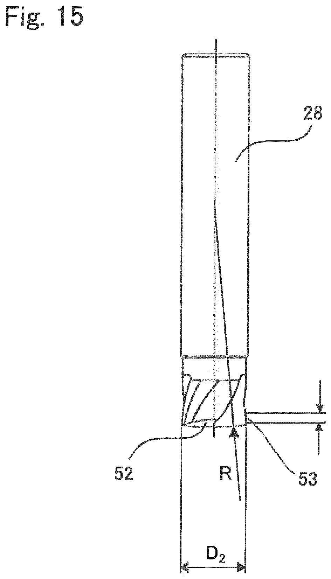

Next, bottom-face finish machining of the tooth groove (Step D) is performed by a specially shaped fourth end mill 28 with an R- or round-end shape (refer to FIG. 6(d)). An example of a shape of the fourth end mill 28 is shown in FIG. 15. The fourth end mill 28 is characterized in that the end mill has a cross-sectional shape of its front end similar to the shape of a gate rotor's front end 51, and in that the end mill is provided with a cutting edge having a quantity of axial depth of cut or more along the side-face of the end mill, and its tool diameter is made capable of being inserted down to a groove bottom in a maximum tooth-groove depth position.

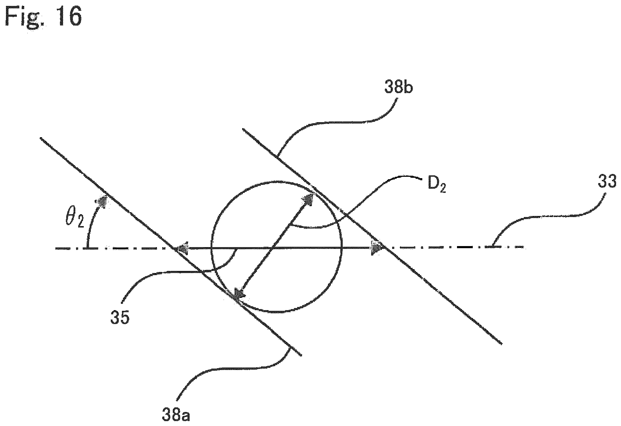

Because, in one example shown in FIG. 15, a radius of a gate rotor 3 is 95 mm, and the gate rotor's front end 51, at R95 (which means a radius of 95; hereinafter in a similar fashion), a shape of a fourth end mill's front end 52 is in a spherical surface shape at R95, and, by presuming the quantity of axial depth of cut of 0.2 mm, a side-face cutting-edge 53 of the fourth end mill is provided therewith in the degree of 2 to 3 mm. In addition, a cutting diameter D2 of the fourth end mill can be acquired by next Expression (3) from a lead angle $\theta_2$ at a tooth-groove bottom in a maximum tooth-groove depth position shown in FIG. 16, and the tooth-groove width 35 thereat.
Expression Figure-3

$$\text{Cutting Diameter of Fourth End Mill } < \ \text{Tooth-Groove Width } \times \sin \theta_2 \qquad (3)$$

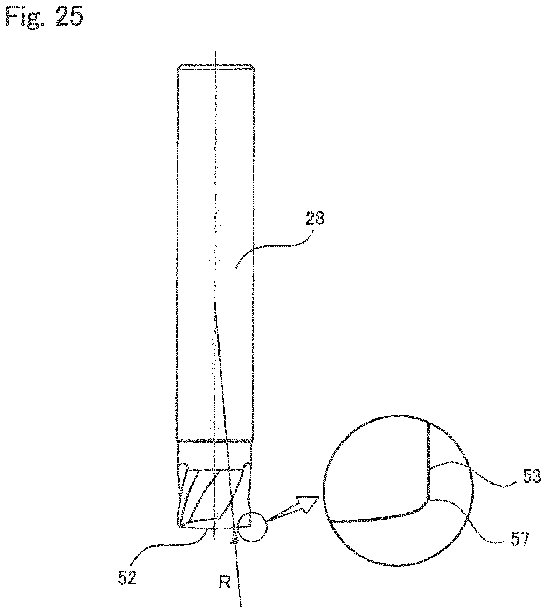

In the fourth end mill 28 shown as an example in FIG. 15, a connecting portion between a portion of the spherical surface shape at R95 and the side-face cutting edge 53 is square-cornered; however, as shown in FIG. 25, it may be adopted that chamfering and/or corner roundness 57 is made for the sake of preventing damage. According to this arrangement, it becomes possible to extend a tool's life-span.

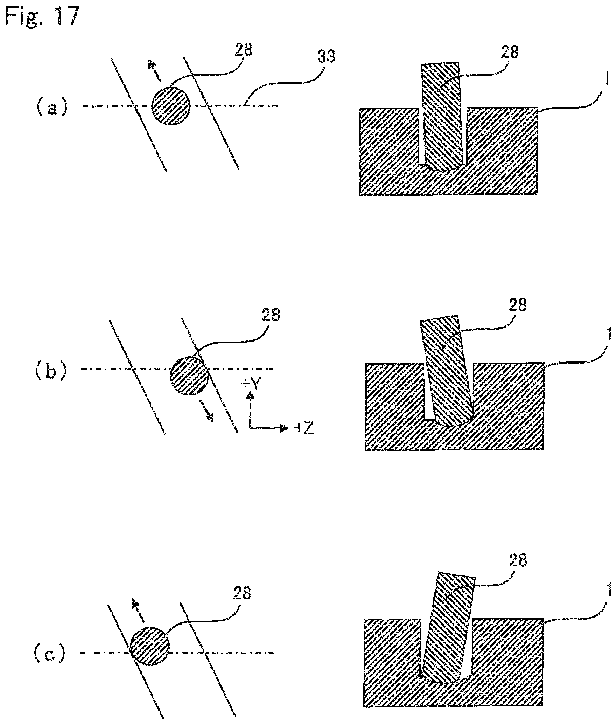

Next, the explanation will be made for cutting passes using the fourth end mill 28.
First, as illustrated in FIG. 17(a), the fourth end mill 28 is driven so that a sealing line 33 between the screw rotor and the gate rotor, and a rotation axis line of the fourth end mill are positioned crosswise on the same surface, and that the rotation axis line is positioned in the middle of the tooth-groove. FIG. 17(a) shows a state in a maximum tooth-groove depth position. Next, the fourth end mill 28 is driven in a turn back direction (refer to FIG. 17(b)). At this time, the fourth end mill 28 is turned at R95, and is made contact with one tooth-groove side-face on the aforementioned sealing line 33, so that the tool rotation axis is shifted away with an offset in parallel with the surface including the aforementioned sealing line 33 and in a -Y-axis direction. Because a lead angle changes, the quantity of the offset varies in accordance with the change.

Similarly, also with respect to the opposite tooth-groove side-face, the fourth end mill 28 is driven to shift its tool rotation axis away with an offset in a +Y-axis direction, and to turn it at R95, so that the fourth end mill 28 is made contact with the opposite tooth-groove side-face on the aforementioned sealing line 33.

This cutting pass is repeated for several times until a target groove-bottom depth is achieved. For example, when the groove bottom geometry is at a groove width of 28 mm with R95, drilling in the degree of 1 mm is required, so that the machining ends in the order of six times when it is performed by an axial depth of cut of 0.2 mm. In addition, the machining of FIG. 17(b) and FIG. 17(c) can be carried out in advance of each other without causing a problem. Moreover, in order to achieve continuous machining, there also arises a case in which the tool is moved in reverse directions in either case of FIG. 17(a), FIG. 17(b) and FIG. 17(c).

The quantity of offset of cutting passes each in FIG. 17(b) and FIG. 17(c) in a Y-axis direction in those cases can be acquired by next Expression (4) when a lead angle at a machining point is defined as $\theta$.

Expression Figure-4

$$\text{Quantity of Offset in Y-axis Direction} = \text{Tool Radius} \times \cos\theta \qquad (4)$$

Moreover, a B-axis turning offset angle to make the tool contact with a tooth-groove side-face can be acquired by next Expression (5).

Expression Figure-5

$$\text{B-axis Turning Offset Angle} = \sin^{-1}\frac{(\text{Groove Width}/2 - \text{Tool Radius} \times \sin\theta)}{\text{Gate Rotor's Rotation Radius}} \quad (5)$$

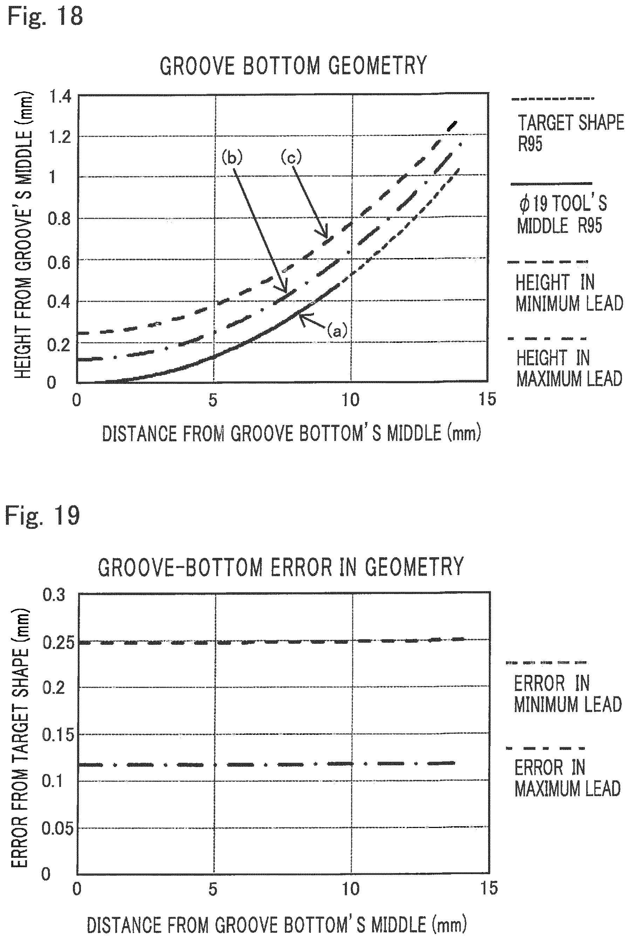

Examples of groove bottom geometries are shown in FIG. 18 and FIG. 19 when the machining is performed in such a manner described above. Here, a screw rotor's diameter $D_1$ is 181 mm; a gate rotor's radius $R_1$, 95 mm; a center-to-center distance $L_1$, 144.8 mm; a groove width, 28 mm; and a tool diameter (cutting diameter) $D_2$ of the fourth end mill 28, 19 mm ($\phi$19).

As it can be understood from FIG. 18 that, there is no error according to the cutting pass shown in FIG. 17(a), so that the groove bottom geometry coincides with a target shape. However, according to the cutting passes shown in FIG. 17(b) and FIG. 17(c), groove bottom geometries differ due to the difference in lead angles. Quantities of error at that time are depicted in FIG. 18; the quantity of error is hardly influenced by a position of the groove bottom, but influenced only by the lead angle.

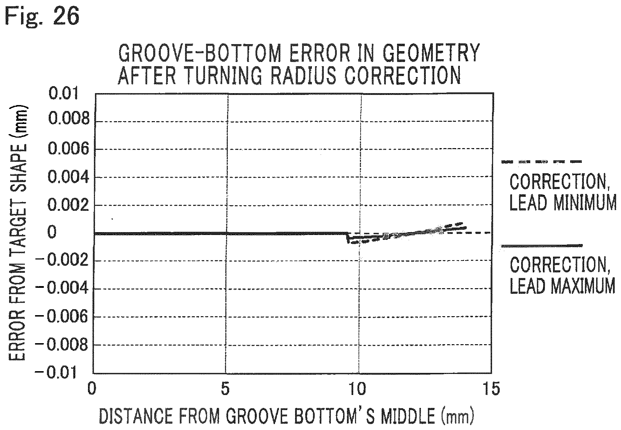

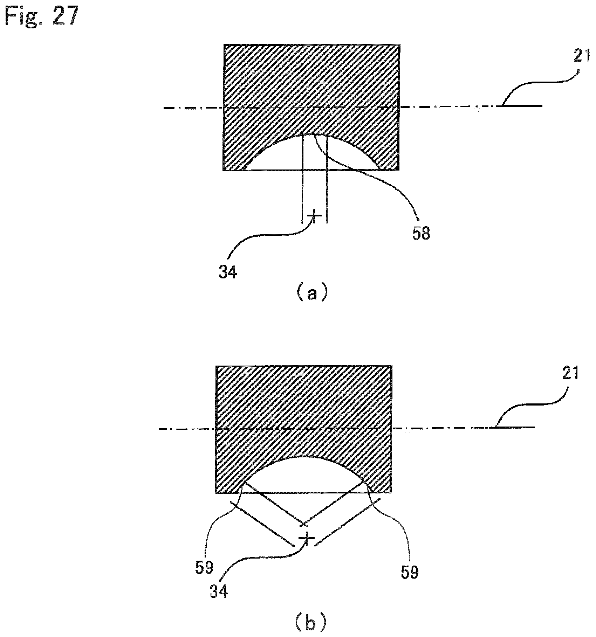

Accordingly, a cutting pass takes on in such a manner that the machining is performed while a turning radius of the fourth end mill 28 is corrected in following with a lead angle. For example, in a case described above, the quantity of turning radius correction is 247 $\mu$m at a maximum depth portion where a lead angle is in the minimum, and the quantity of turning radius correction on a screw rotor's outer periphery surface where a lead angle is in the maximum is 118 $\mu$m (refer to FIG. 19). In FIG. 26, form errors after the turning radius is corrected in following with a lead angle are shown. "Correction, Lead Minimum (the characteristic indicated by the broken line in the figure)" indicates form errors of a groove bottom 58 shown in FIG. 27(a) at the maximum depth position where a lead angle is in the minimum; and "Correction, Lead Maximum (the characteristic indicated by the solid line in the figure)" indicates form errors of a groove bottom 59 shown in FIG. 27(b) at a screw rotor's outer periphery surface position where a lead angle is in the maximum. Because, from the groove bottom center up to 9.5 mm, the machining is performed in accordance with the cutting pass of FIG. 17(a), there is no error. Meanwhile, from 9.5 mm up to a groove width end (14 mm), those are cases in which the turning radius is corrected in following with a lead angle in FIG. 17(b) or FIG. 17(c), so that the error is $\pm 1$ $\mu$m or less.

In Embodiment 1, as illustrated in FIGS. 17(a), 17(b) and 17(c), a method of machining is described in accordance with three patterns of cutting passes of FIG. 17(a), FIG. 17(b) and FIG. 17(c); however, when a tool diameter is half of a groove width or more, machining of FIG. 17(a) in the middle of the groove can be omitted.

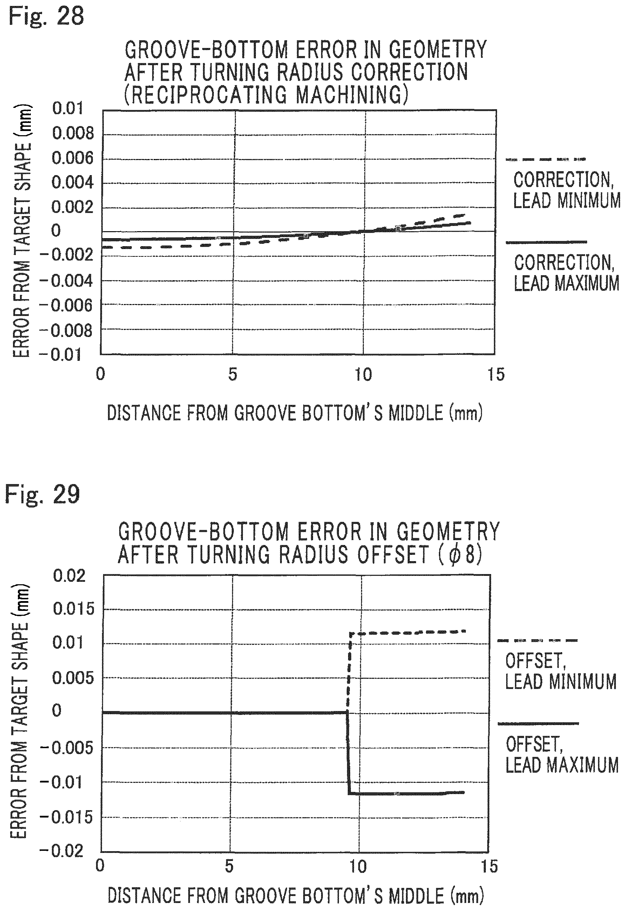

In the case described above, because the tool diameter is $\phi$19 mm with respect to the groove width of 28 mm, the machining can be achieved only by reciprocating machining of FIGS. 17(b) and 17(c). In FIG. 28, shown are form errors after the turning radius in a case in which the machining is performed only by the reciprocating machining of FIGS. 17(b) and 17(c) is corrected in following with a lead angle. "Correction, Lead Minimum (the characteristic indicated by the broken line in the figure)" indicates errors when a lead angle is in the minimum; and "Correction, Lead Maximum (the characteristic indicated by the solid line in the figure)," errors when a lead angle is in the maximum. From this figure, it can be understood that the form error is achieved in $\pm 1.5 \mu$m or less.

As explained above, according to Embodiment 1 of the present invention, a rotating tool is utilized for the finish machining of a tooth-groove bottom-face, and so, a cutting speed is increased, so that more efficient machining can be achieved, in comparison with a case of finish machining of a tooth-groove bottom-face by a conventional shaving bit where a relative speed between the tool and the workpiece becomes the cutting speed. In addition, according to a shaving bit, axial driving force of the machining device causes to be rate controlling or determining, which results in a quantity of axial depth of cut in the degree of several tens of $\mu$m; however, according to the rotating tool in this embodiment, depth of cut at several hundreds of $\mu$m is made possible, so that more efficient machining can be achieved. In addition, the rotating tool in this embodiment is a rotationally symmetrical tool, and so, in comparison with a case in which finish machining of a tooth groove or that of a tooth bottom is performed by a shaving bit, the measurement of a cutting-edge position becomes easier, and the accuracy of a tooth-groove depth is enhanced. Moreover, as for the process step using the fourth end mill in this embodiment, manufacturing of the tool can also be simplified in comparison with a case in which tooth-groove bottom-face finishing is performed by a conventional shaving bit for the machining.

Note that, in this embodiment, the explanation has been made by presuming that the midline of a screw rotor and a sealing line of a refrigerant gas sealed by tooth-groove side-faces and tooth side-faces (here, the tooth-groove side-faces mean tooth-groove side-faces of the screw rotor, and the tooth side-faces, tooth side-faces of the gate rotor), and a tooth-groove bottom-face and a tooth front-end are in coincidence with each other; however, when the midline of a screw rotor and a sealing line are displaced to each other, it is simply required to consider a position of the sealing line as a reference in a similar manner.

In addition, even when the arrows of tool movement directions shown in FIGS. 6(a), 6(b), 6(c) and 6(d), and FIGS. 17(a), 17(b) and 17(c) are in reverse directions, the machining can be performed without causing a problem.

Furthermore, in this embodiment, tooth-groove bottom-face finishing is performed after tooth-groove side-face finishing; however, if a finishing margin of a tooth-groove side-face(s) is small, similar effects can be obtained even when the tooth-groove side-face finishing is performed after the tooth-groove bottom-face finishing.

Embodiment 2

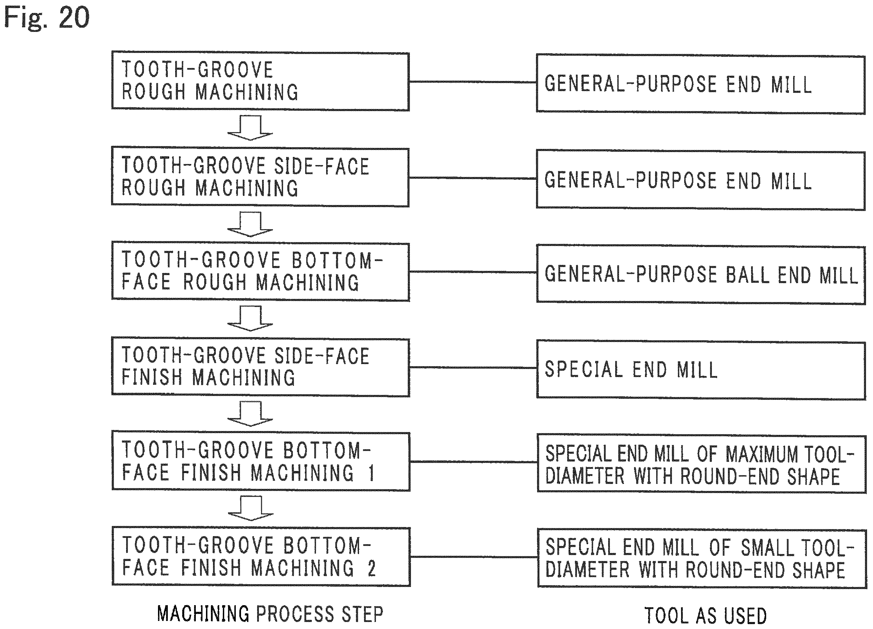

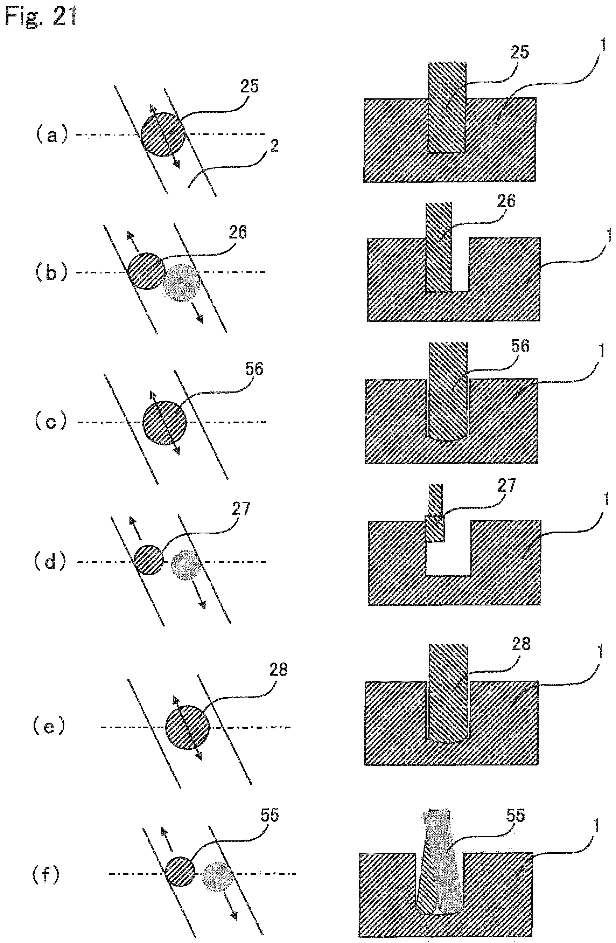

In Embodiment 1, the explanation has been made for the case in that the fourth end mill 28 is used for the process step of finish machining of a tooth-groove bottom-face; in Embodiment 2, the explanation will be made for a case in which the fourth end mill 28 and a fifth end mill 55 whose diameter is smaller than that of the fourth end mill 28 are used as tools. In addition, the explanation will be made, referring to the figures of FIG. 20 and FIG. 21 showing the entirety of machining process steps, for a case in which, in a rough machining process step of a tooth-groove bottom-face, a general-purpose sixth end mill 56 whose front end is in a round-end shape or in an oval shape having a large radius of curvature is used as the tool.

Because similar to those in Embodiment 1 are a first process step for drilling, by using the first end mill 25 as a tool, in a depth direction of a screw tooth-groove to be by giving a constant depth of cut down to a depth being determined in advance (refer to FIG. 21(a)), a second process step for performing rough machining of screw tooth-groove side-faces by using, as a tool, the general-purpose second end mill 26 smaller than a groove width of the screw tooth-groove (refer to FIG. 21(b)), and a fourth process step for performing finish machining of screw tooth-groove side-faces by using, as a tool, the third end mill 27 which is characterized in that a neck portion is provided therewith (refer to FIG. 21(d)), the explanation is omitted to avoid their explanation redundant thereto.

After drilling machining of a tooth groove and rough machining of tooth-groove side-faces, rough machining of a tooth-groove bottom-face is performed as a third process step by using, as for the sixth end mill 56, a commercially available ball end mill or an oval-shaped end mill as the tool (refer to FIG. 21(c)).

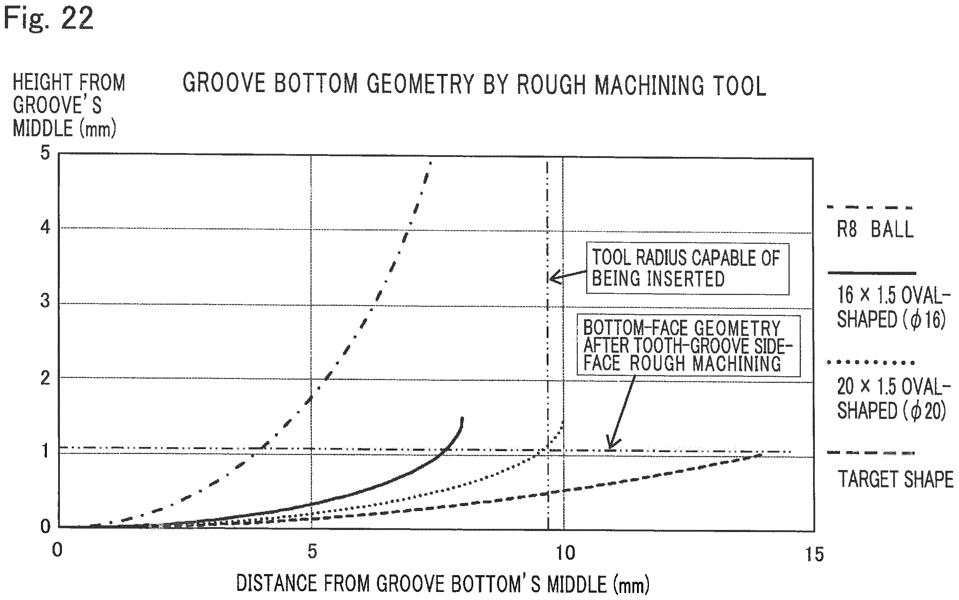

Specific examples of groove bottom geometries at this time are shown in FIG. 22. In a case in which a screw rotor's diameter is 181 mm, a gate rotor's radius, 95 mm, a center-to-center distance $L_1$, 144.8 mm, and a groove width, 28 mm, a ball end mill of R8 (the tool's cutting diameter of 16 mm) is an end mill having the maximum radius of curvature among commercially available ball end mills, because a tool diameter capable of being inserted to a groove bottom is an outer diameter of 19.4 mm ($\phi$19.4).

In addition, as for a commercially available oval-shaped tool, an oval end mill whose length of the major axis is 16 mm and whose length of the minor axis is 3 mm (model $16 \times 1.5$) can be used. Although there exists an oval end mill whose length of the major axis is 20 mm and whose length of the minor axis is 3 mm (model $20 \times 1.5$), the end mill cannot be used in this embodiment because it cannot be inserted to a tooth-groove bottom-face. When modification machining is performed to make a cutting diameter of the outer circumference less than or equal to 19.4 mm ($\phi$19.4), such an end mill becomes usable.

Shapes when each of those tools is used, and also a target shape (R95) are shown in FIG. 22. Because a shape after the tooth-groove side-face rough machining is of a flat surface, the amount of removal can be increased more by an oval end mill of the model "16 × 1.5" than by a ball end mill of R8. In addition, by using a fourth end mill having been used for tooth-groove bottom-face finishing and the life-span is reached, the amount of removal can be increased still more. This is because, the nearer the shape is to the target shape, the more the amount of removal from the flat surface after the side-face machining increases.

After performing finish machining of tooth-groove side-faces as the fourth process step, finish machining is performed only in the middle on a tooth-groove bottom-face as a fifth process step by using the fourth end mill 28 (refer to FIG. 21(e)). The fifth process step in Embodiment 2 is the same as that the machining only in the middle at the fourth process step of Embodiment 1 (refer to FIG. 17(a)) is performed as machining down to a final depth.

Next, as a sixth process step, bottom-face finish machining of a tooth groove is performed by the fifth end mill 55 whose diameter is smaller than that of the fourth end mill 28, and whose front end is in a special shape having the same R- or round-end shape as the groove bottom geometry or shape (refer to FIG. 21(f)). The fifth end mill 55 is characterized in that the end mill has a shape similar to that of FIG. 15, and a cross-sectional shape of end mill's front end is the same shape as that of the gate rotor's front end 51, and in that the fifth end mill is provided with a cutting edge having a quantity of axial depth of cut or more along a side-face of the end mill, and a tool diameter which is made smaller than that of the fourth end mill 28.

In addition, as for a cutting pass of the fifth end mill 55, it is driven so that its tool rotation axis is shifted away with an offset in parallel with the surface including the sealing line 33 described above and in a $\pm$Y-axis direction, while the fifth end mill is made contact with tooth-groove side-faces each on the aforementioned sealing line 33 with the degree of B-axis turning offset, in the same manner in the cases of FIG. 17(b) and FIG. 17(c). Because the quantity of the offset in the Y-axis direction varies in accordance with a lead angle, the offset results in shifting also in the Y-axis direction during turning movement of R95.

In this case, the quantity of offset in a Y-axis direction, and the degree of B-axis turning offset are the same as Expression (4) as set forth in Embodiment 1, and Expression (5) as set forth in Embodiment 1, respectively. In actual work operations, this cutting pass is repeated for several times until a target groove-bottom depth is achieved.

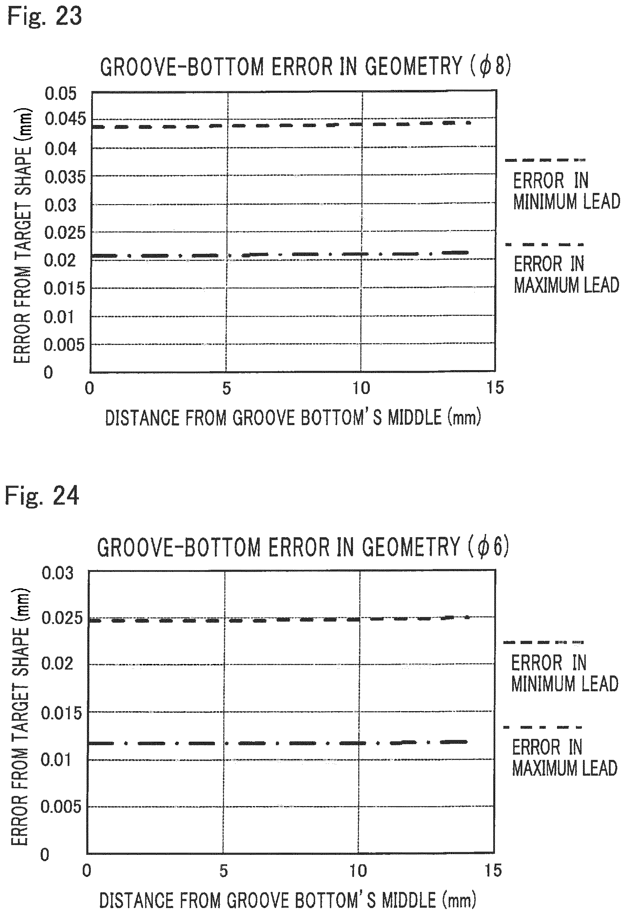

Bottom-face geometries at the sixth process step when a tool diameter of the fifth end mill 55 is at an outer diameter of 8 mm ($\phi$8) and those when it is at an outer diameter of 6 mm ($\phi$6) are shown in FIG. 23 and FIG. 24, respectively. In these cases, a screw rotor's diameter is 181 mm; a gate rotor's radius, 95 mm; a center-to-center distance $L_1$, 144.8 mm; and a groove width, 28 mm. By the tool diameter of $\phi$8 in FIG. 23, the errors are 44 $\mu$m at a minimum lead portion and 21 $\mu$m at a maximum lead portion, and, by the tool diameter of $\phi$6 in FIG. 24, the errors are 25 $\mu$m at the minimum lead portion and 12 $\mu$m at the maximum lead portion; it can be understood that the errors are smaller than those in a case in which a turning radius is not corrected in Embodiment 1 as shown in FIG. 19.

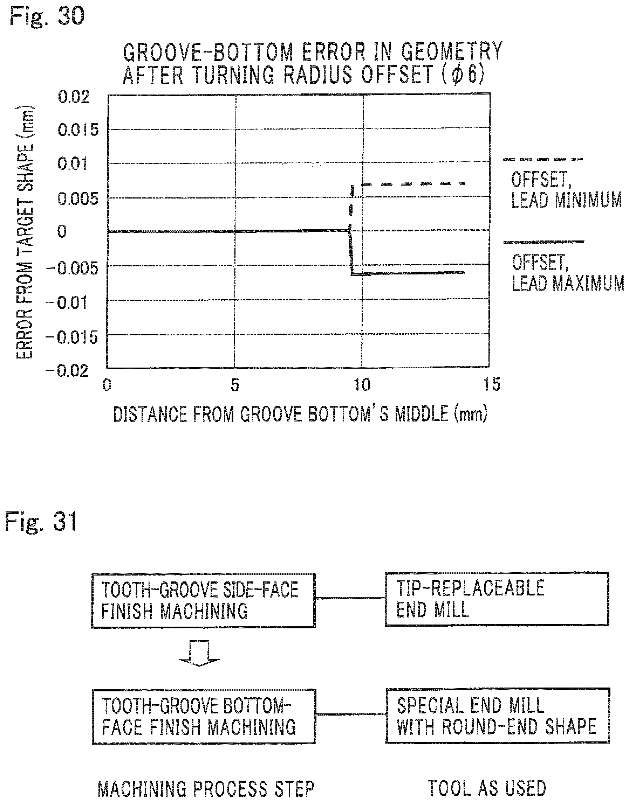

Moreover, when machining is performed by the fifth end mill 55, more accurate machining can be achieved by performing the machining by shifting a turning radius away with an offset of a constant value. Bottom-face errors in geometry are shown in FIG. 29 when the fifth end mill 55 is at $\phi$8, and in FIG. 30 when the fifth end mill 55 is at $\phi$6. In a case of $\phi$8, by shifting the turning radius away with an offset of 32.5 $\mu$m, the bottom-face error in geometry is achieved at $\pm$12 $\mu$m or less. In a case of $\phi$6, by shifting the turning radius away with an offset of 18 $\mu$m, the bottom-face error in geometry is achieved at $\pm$7 $\mu$m or less.

There exist these errors each at both end portions near to tooth side-faces at a tooth-groove bottom portion by the quantity of length subtracted by a length of a tool diameter of the fourth end mill 28 from a groove width, so that highly accurate machining can be achieved even when such correction of a turning radius in Embodiment 1 is not performed. The smaller the size of the fifth end mill 55 is, the more reduction of an error in the groove bottom geometry or shape is achieved; however, it is desirable that a cutting diameter is more than or equal to half a length subtracted by a length of a tool diameter of the fourth end mill 28 from a groove width.

This is because, when a cutting diameter of the fifth end mill 55 is smaller than half a length subtracted by a length of a tool diameter of the fourth end mill 28 from the groove width, finish machining of a tooth-groove bottom-face cannot be performed by only the fifth process step and the sixth process step, so that a face(s) of rough machining is left remained as it is. In addition, if the tool diameter is small, tool stiffness is reduced, and so, work operation efficiency is lowered due to generation of chatter vibration or the like at the time of machining.

According to Embodiment 2 of the present invention, a rotating tool is utilized for the finish machining of a tooth-groove bottom-face, and so, a cutting speed is increased, so that more efficient machining can be achieved, in comparison with a case in which finish machining of a tooth-groove bottom-face is performed hitherto using a shaving bit where a relative speed between the tool and the workpiece becomes the cutting speed. According to a shaving bit, axial driving force of the machining device causes to be rate controlling or determining, which results in a quantity of axial depth of cut in the degree of several tens of $\mu$m (per one time); however, according to the rotating tool, depth of cut at several hundreds of $\mu$m (per one time) is made possible, so that more efficient machining can be achieved.

In addition, the rotating tool is a rotationally symmetrical tool, and so, in comparison with a case in which finish machining of a tooth groove or that of a tooth bottom is performed by a shaving bit, the measurement of a cutting-edge position becomes easier, and the accuracy of a tooth-groove depth is enhanced. Moreover, as for the process steps using the fourth end mill and the fifth end mill 55 in this embodiment, manufacturing of the tools can also be simplified, in comparison with a case in which finish machining of a tooth groove or that of a tooth bottom is performed by a shaving bit.

Furthermore, in the screw rotor 1 machined according to the machining methods of Embodiments 1 and 2 described above, the geometry of tool is transferred as its image for the bottom-face geometry, so that highly accurate machining is achieved as shown in FIG. 18, FIG. 23, FIG. 24, and further in FIG. 26 and FIG. 28 through FIG. 30. In addition, because the measurement of position coordinates at a tool's front end can be accurately performed, a tooth-groove depth position can be machined exactly according to a design value.

For this reason, a plurality of screw-rotor tooth grooves 2 of the screw rotor 1 and a plurality of teeth 4 of the gate rotors 3a and 3b engage accurately with one another, so that interspaces between the tooth grooves and the teeth are reduced. Therefore, an outer circumferential portion of a screw rotor and those of gate rotors are covered by an enclosure, and the tooth-grooves 2 of the screw rotor are closed by means of the gate rotors rotating together with the screw rotor concurrently with its rotation, so that a refrigerant gas is sealed without causing its leakage, and so a screw compressor of good performance can be manufactured.

Embodiment 3

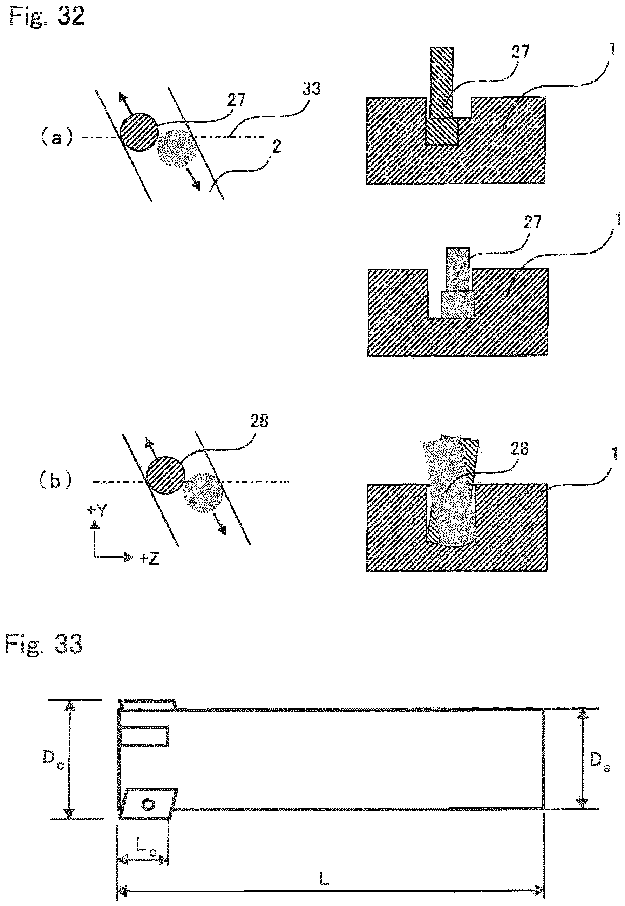

In Embodiment 1, machining process steps of a tooth groove are made of four process steps, and, in Embodiment 2, machining process steps of a tooth groove are made of six process steps; in Embodiment 3, the explanation will be made referring to FIG. 31, and FIGS. 32(a) and 32(b) for a case in which the manufacturing is carried out by two process steps of side-face finishing and bottom-face finishing, where the number of process steps is reduced.

By eliminating a rough machining process step such as the one in Embodiment 1 and Embodiment 2, tooth-groove machining is performed by a process step in which finish machining of tooth-groove side-faces is performed while performing drilling machining of a screw tooth-groove by using, as a tool, the third end mill 27 which is characterized in that a neck portion is provided therewith (refer to FIG. 32(a)), and by a process step in which finish machining of a bottom-face of the screw tooth-groove is performed by the fourth end mill 28, being a special end mill with a round-end shape, as a tool in the same manner as that in Embodiment 1 (refer to FIG. 32(b)).

In this embodiment, a commercially available tip-replaceable end mill is utilized as the third end mill which is characterized in that a neck portion is provided therewith. In FIG. 33, illustrated is a general shape of the tool geometry which is in an undercut type of an ASM form (here, "ASM" represents a model of a tool holder) commercially available. For example, in a case in which a screw rotor's diameter is 181 mm; a gate rotor's radius, 95 mm; a center-to-center distance $L_1$, 144.8 mm; and a groove width, 28 mm, an effect is achieved which is equivalent to the third end mill being characterized in that a neck portion is provided therewith, when a tool of a model ASM0717S16R-4 is used in which a tool's outer diameter (indicated by $D_c$ in the figure) is $\phi$17 mm, and a shank's outer diameter (indicated by $D_s$ in the figure) is $\phi$16 mm. Therefore, if a commercially available tool whose tips are replaceable in its shape satisfying Expression (1) is utilized, tool costs become inexpensive. Note that, in FIG. 33, an overall length of the tool is designated by the symbol L, and its cutting-edge length, by the symbol $L_c$.

Next, the explanation will be made for a cutter or cutting pass using the third end mill 27. A basic cutting pass is the same as that in a case of Embodiment 1; the machining is divided in a tooth-groove depth direction by a length corresponding to that of the cutting-edge portion 44 of the third end mill 27 described above, and the cutting pass is defined to move a turning center of the third end mill 27 described above so that an outer circumferential cylindrical-shaped portion of the cutting-edge portion 44 described above makes contact with both leads of the cutting-edge portion's upper-part lead 49 generated on the screw rotor at a tooth-groove depth where machining is performed at a position of the upper part 47 of the aforementioned cutting -edge portion, and of the cutting-edge portion's lower-part lead 50 generated on the screw rotor at a tooth-groove depth where machining is performed at a position of the lower part 48 of the aforementioned cutting-edge portion.

Because rough machining is not performed, both sides of the tooth groove 2 result in being individually machined, and a constant depth of cut is given in a tooth-groove depth direction, so that a side firstly machined results in groove cutting to cause a large machining load, whereas, at the time of machining a tooth-groove side-face on the opposite side which does not result in groove cutting, a machining load does not become large in the degree of that on the first machining side. The control is achieved so that, by making a feed speed of a tooth-groove side-face being first machined slower than a feed speed of a tooth-groove side-face on the opposite side, machining accuracy on both sides becomes equivalent to each other.

As an example, when a feed speed is controlled, with respect to a tool diameter of one side to be firstly machined, at a reciprocal number of a ratio with respect to a radial depth of cut at the time machining the opposite side, machining loads become approximately equivalent to each other, and machining accuracy on both of the sides becomes equivalent to each other. This machining is repeated so that drilling is achieved down to a required depth (refer to FIG. 32(a)).

Next, the explanation will be made for bottom finishing of a tooth-groove. As for a tool to be utilized, a fourth end mill, being a special end mill with a round-end, is used in the same manner as that in Embodiment 1. The fourth end mill 28 is characterized in that the end mill has a cross-sectional shape of end mill's front end similar to the shape of the gate rotor's front end 51 as shown in FIG. 15, and in that the end mill is provided with a cutting edge having a quantity of axial depth of cut or more along the side-face of the end mill, and its tool diameter is made capable of being inserted down to a groove bottom in a maximum tooth-groove depth position.

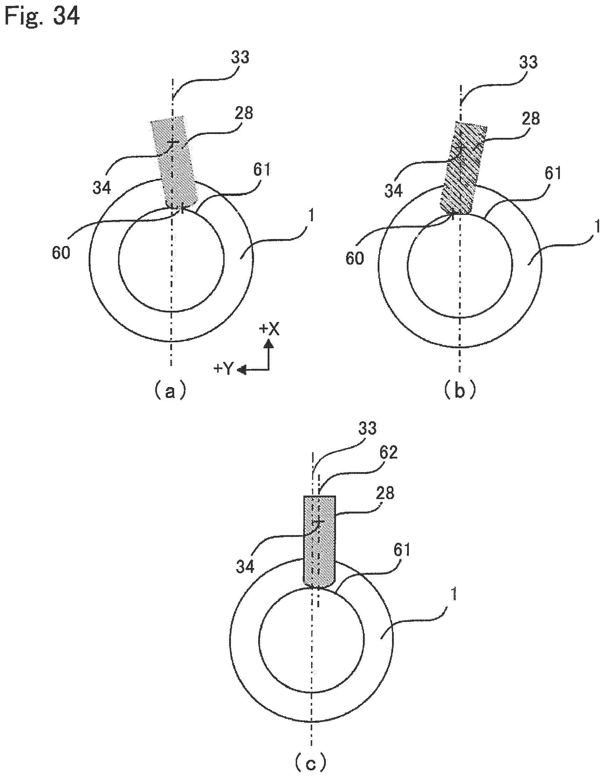

The explanation will be made for a cutting pass for finishing a bottom-face of the tooth groove by presuming a case in which a radius of the gate rotor 3 is 95 mm, and the gate rotor's front end 51, at R95. As shown in FIG. 34(b), the fourth end mill 28 is driven so that the tool is turned at R95, and is made contact with one tooth-groove side-face on the sealing line 33 described above. Similarly, also with respect to the opposite tooth-groove side-face, the fourth end mill 28 is driven so that it is turned at R95, and that the fourth end mill 28 is made contact with the opposite tooth-groove side-face on the aforementioned sealing line 33.

At this time, as shown in FIG. 34(a), a tool front-end's rotational center 60 is shifted away with an offset in parallel with the surface including the aforementioned sealing line 33 and in a -Y-axis direction; however, the control is performed so that a turning center (the same as the rotational center of the gate rotor) 34 at R95 remains on the aforementioned sealing line 33. By performing the control as described above, the front end of the fourth end mill 28 results in making contact with a groove-bottom's virtual circle 61. In addition, because a lead angle changes, the quantity of the offset described above varies in accordance with the change. As for the calculation scheme, it is the same as those in Embodiment 1, so that their explanation will be omitted here.

At the time of machining the opposite tooth-groove side-face, the control is performed so that, as shown in FIG. 34(b), the tool front-end's rotational center 60 is shifted away with an offset in parallel with the surface including the aforementioned sealing line 33 and in a +Y-axis direction, and that the turning center (the same as the rotational center of the gate rotor) 34 at R95 remains on the aforementioned sealing line 33.

For the sake of comparison, a correction method in those cases in Embodiments 1 and 2 is illustrated in FIG. 34(c). The fourth end mill 28 is turned at R95, and is made contact with a tooth-groove side-face on the aforementioned sealing line 33, so that the tool rotation axis 62 is shifted away with an offset in parallel with the surface including the aforementioned sealing line 33 and in a -Y-axis direction; and further, a turning radius is corrected in following with a lead angle.

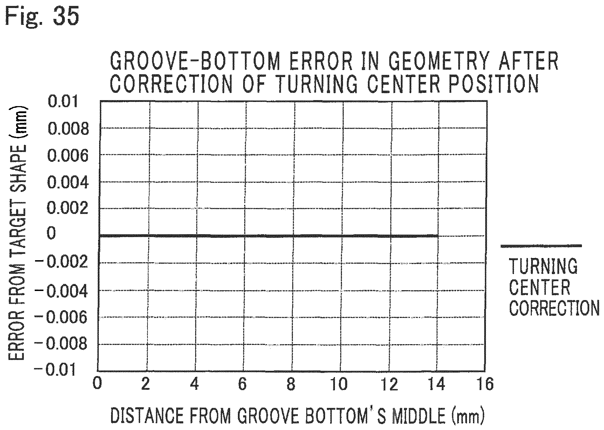

By correcting a position of a tool's front end in such a manner in Embodiment 3, the geometry of the end mill with a round-end is transferred as its image to the bottom-face of a tooth groove, and so, the machining can be theoretically performed without any form error as shown in FIG. 35. This cutting pass is repeated for several times until a target groove-bottom depth is achieved.

According to Embodiment 3, a rotating tool is utilized for the finish machining of a tooth-groove bottom-face, and so, a cutting speed is increased, so that more efficient machining can be achieved, in comparison with a case of finish machining of a tooth-groove bottom-face hitherto using a shaving bit where a relative speed between the tool and the workpiece becomes the cutting speed. When a shaving bit is used therefor, axial driving force of the machining device causes to be rate controlling or determining, which results in a quantity of axial depth of cut in the degree of several tens of $\mu$m (per one time); however, when a rotating tool is used therefor, depth of cut at several hundreds of $\mu$m (per one time) is made possible, so that more efficient machining can be achieved.

In addition, the rotating tool is a rotationally symmetrical tool in its geometry, and so, in comparison with a case in which finish machining of tooth-groove side-faces or a tooth-groove bottom-face is performed by a shaving bit, the measurement of a cutting-edge position becomes easier, and the accuracy of a tooth-groove depth is enhanced. Moreover, as for the process step using the fourth end mill in this embodiment, manufacturing of the tool can also be simplified, in comparison with a case in which finish machining of a tooth groove or that of a tooth bottom is performed by a shaving bit.

Furthermore, as for the bottom-face geometry of the screw rotor 1 machined according to the machining method of Embodiment 3 described above, the geometry of tool is transferred as its image, so that highly accurate machining is achieved. In addition, because the measurement of position coordinates at a tool's front end can be accurately performed, a tooth-groove depth position can be machined exactly according to a design value. For this reason, a plurality of screw-rotor tooth grooves 2 of the screw rotor 1 and a plurality of teeth 4 of the gate rotors 3a and 3b engage accurately with one another, so that interspaces between the tooth grooves and the teeth are reduced.

Therefore, an outer circumferential portion of a screw rotor and those of gate rotors are covered by an enclosure, and the tooth grooves 2 of the screw rotor are closed by means of the gate rotors rotating together with the screw rotor concurrently with its rotation, so that a refrigerant gas is sealed without causing its leakage, and so a screw compressor of good performance can be manufactured.

It should be noted that, in Embodiments 1, 2 and 3, the workpiece rotation axis and the tool turning axis are individually placed on their bases, and the three axes of X-, Y- and Z-axes perpendicular to each other are placed on one base; however, a combination is not constrained to those described above. Note that, in the present invention, each of the embodiments can be freely combined, and/or each of the embodiments can be appropriately modified or eliminated without departing from the scope of the invention.

Explanation of Numerals and Symbols

| | |
|---|---|
| 1 | designates a screw rotor |
| 2 | tooth groove |
| 3, 3a, 3b | gate rotor |
| 4 | tooth |
| 5 | C-axis spindle |
| 6 | tool |
| 7 | the X-axis movable stage |
| 8 | Z-axis movable stage |
| 9 | B-axis turntable |
| 10 | bed |
| 11 | C-axis spindle headstock |
| 12 | tailstock |
| 13a, 13b | steady brace |
| 14 | shaft |
| 15 | C-axis chuck |
| 16 | spindle |
| 17 | holder |
| 20 | tool's turning center |
| 21 | screw rotor's rotational center |
| 24a, 24b | circular arc trajectory |
| 25 | first end mill |
| 26 | second end mill |
| 27 | third end mill |
| 28 | fourth end mill |
| 29 | tapered end mill |
| 30 | tooth side-face |
| 33 | sealing line between screw rotor and gate rotor |
| 34 | gate rotor's rotational center |
| 35 | tooth-groove width |
| 37, 37a, 37b | lead on outer periphery surface |
| 38, 38a, 38b | lead at tooth-groove bottom portion |
| 41 | tooth-groove side-face |
| 42 | outer periphery surface |
| 43 | tooth-groove bottom-face |
| 44 | cutting-edge portion |
| 45 | neck portion |
| 46 | shank portion |
| 47 | cutting-edge portion's upper-part |
| 48 | cutting-edge portion's lower-part |
| 49 | cutting-edge portion's upper-part lead |
| 50 | cutting-edge portion's lower-part lead |
| 51 | gate rotor's front end |
| 52 | fourth end mill's front end |
| 53 | fourth end mill's side-face cutting-edge |
| 55 | fifth end mill |
| 56 | sixth end mill |
| 57 | corner roundness |
| 58 | groove bottom at maximum depth position where lead angle is in the minimum |
| 59 | groove bottom at screw rotor's outer periphery surface position where lead angle is in the maximum |
| 60 | tool front-end's rotational center |
| 61 | groove-bottom's virtual circle |
| 62 | tool rotation axis; |
| $D_1$ | screw rotor's diameter |
| $D_2$ | fourth end mill's cutting diameter |

d             quantity of dent
h             tooth-groove depth
$L_1$            center-to-center distance
$L_2$            distance between tool's turning center and screw rotor's rotational center
$R_1$            gate rotor's radius
$R_2$            tool's turning radius
$R_3$            tooth-groove side-face rotation radius at tooth-groove depth position
$R_4$            tooth side-face rotation radius at tooth-groove depth position
$\theta$            lead angle at a machining point
$\theta_1$           lead angle on an outer periphery surface
$\theta_2$           lead angle at a tooth-groove bottom
$D_c$            tool's outer diameter
$D_s$            shank's outer diameter
$L_c$            cutting-edge length
L             overall length

## Claims

1. A method of machining a screw rotor, comprising:

   a first process step for drilling in a depth direction of a screw-rotor's screw tooth-groove to be by giving a constant depth of cut to a depth being determined in advance, by using a first end mill;
   a second process step for performing rough machining of side-faces of a screw tooth-groove, by using a second end mill having a diameter smaller than a groove width of the screw tooth-groove;
   a third process step for performing finish machining of side-faces of a screw tooth-groove, by using a third end mill being furnished with a cutting-edge portion shorter than a depth size of the screw tooth-groove and with a neck portion having a smaller diameter than a diameter of the cutting-edge portion; and
   a fourth process step for performing finish machining of the bottom-face of a screw tooth-groove, by using a fourth end mill having a shape associated with a bottom-face of the screw tooth-groove and also having an outer diameter less than or equal to a tool diameter capable of being inserted to a groove bottom of the screw tooth-groove, and being provided with a cutting edge having a quantity of axial depth of cut or more along a side-face of the fourth end mill.

2. The method of machining a screw rotor as set forth in claim 1,
   wherein the first process step and the second process step are eliminated, and, at the third process step, finish machining of side-faces of a screw tooth-groove is performed by using the third end mill while performing drilling machining of the screw tooth-groove.

3. The method of machining a screw rotor as set forth in claim 1 or 2,
   wherein, at the fourth process step, cutting passes for forming the bottom-face of a screw tooth-groove are defined by one cutting pass at a middle portion of a groove bottom of the screw tooth-groove for setting a center of rotation axis of the fourth end mill on a sealing line for sealing a compression medium by the screw rotor and by a gate rotor engaged with the screw rotor, and defined by two cutting passes at both end portions of a bottom portion of the screw tooth-groove, where the fourth end mill is made contact with side-faces of the screw tooth-groove on the sealing line.

4. The method of machining a screw rotor as set forth in claim 1 or 2,
   wherein, at the fourth process step, cutting passes for forming the bottom-face of a screw tooth-groove are defined by two cutting passes at both end portions of a bottom portion of the screw tooth-groove, where the fourth end mill is made contact with side-faces of the screw tooth-groove on a sealing line for sealing a compression medium by the screw rotor and by a gate rotor engaged with the screw rotor.

5. The method of machining a screw rotor as set forth in claim 3 or 4,
   wherein, at the fourth process step, a turning radius of the fourth end mill is corrected in following with a lead angle at a time of machining both end portions of a bottom portion of the screw tooth-groove, where the fourth end mill is made contact with the side-faces of the screw tooth-groove on the sealing line.

6. A method of machining a screw rotor, comprising:

- a first process step for drilling in a depth direction of a screw-rotor's screw tooth-groove to be by giving a constant depth of cut to a depth being determined in advance, by using a first end mill;

a second process step for performing rough machining of side-faces of a screw tooth-groove, by using a second end mill having a diameter smaller than a groove width of the screw tooth-groove;

a third process step for performing finish machining of side-faces of a screw tooth-groove, by using a third end mill being furnished with a cutting-edge portion shorter than a depth size of the screw tooth-groove and with a neck portion having a smaller diameter than a diameter of the cutting-edge portion; and

a fourth process step for performing finish machining of the bottom-face of a screw tooth-groove, by using a fourth end mill having a shape associated with a bottom-face of the screw tooth-groove and also having an outer diameter less than or equal to a tool diameter capable of being inserted to a groove bottom of the screw tooth-groove, and being provided with a cutting edge having a quantity of axial depth of cut or more along a side-face of the fourth end mill, and by using a fifth end mill having a tool diameter still smaller than that of the fourth end mill, and being provided with a cutting edge having a quantity of axial depth of cut or more along a side-face of the fifth end mill.

7. The method of machining a screw rotor as set forth in claim 6,
wherein the bottom-face of a screw tooth-groove is formed at the fourth process step by means of:

machining at a middle portion of a groove bottom of a screw tooth-groove by using the fourth end mill, where a center of rotation axis of the fourth end mill is set on a sealing line for sealing a compression medium by the screw rotor and by a gate rotor engaged with the screw rotor; and

machining at both end portions of a bottom portion of a screw tooth-groove by using the fifth end mill, where the fifth end mill is made contact with side-faces of the screw tooth-groove on the sealing line.

8. A device of machining a screw rotor, comprising:

a first end mill placed on a tool turning axis, for drilling in a depth direction of a screw-rotor's screw tooth-groove to be by giving a constant depth of cut to a depth being set in advance;

a second end mill having a diameter smaller than a groove width of a screw tooth-groove, being placed on the tool turning axis, for performing rough machining of side-faces of the screw tooth-groove;

a third end mill being furnished with a cutting-edge portion shorter than a depth size of a screw tooth-groove and with a neck portion having a smaller diameter than a diameter of the cutting-edge portion, being placed on the tool turning axis, for performing finish machining of side-faces of the screw tooth-groove; and

a fourth end mill having a shape associated with a bottom-face of a screw tooth-groove, being placed on the tool turning axis, for performing finish machining of the bottom-face of the screw tooth-groove, wherein

the fourth end mill has an outer diameter less than or equal to a tool diameter capable of being inserted to a groove bottom of the screw tooth-groove and also has a cutting edge with a quantity of axial depth of cut or more along a side-face of the fourth end mill, and performs finish machining of the screw tooth-groove.

9. The device of machining a screw rotor as set forth in claim 8, further comprising a fifth end mill having an outer diameter smaller than a tool diameter of the fourth end mill and also having a cross-sectional shape associated with the bottom-face of a screw tooth-groove, and having a cutting edge with a quantity of axial depth of cut or more along a side-face of the fifth end mill, being placed on the tool turning axis, for performing finish machining of the bottom-face of the screw tooth-groove.

10. Tools for use in machining a screw rotor, comprising:

a first end mill for drilling in a depth direction of a screw-rotor's screw tooth-groove to be by giving a constant depth of cut to a depth being set in advance;

a second end mill whose diameter is smaller than a groove width of a screw tooth-groove, for performing rough machining of side-faces of the screw tooth-groove;

a third end mill being furnished with a cutting-edge portion shorter than a depth size of a screw tooth-groove and with a neck portion having a smaller diameter than a diameter of the cutting-edge portion, for performing finish machining of side-faces of the screw tooth-groove; and

a fourth end mill having a shape associated with a bottom-face of a screw tooth-groove and an outer diameter less than or equal to a tool diameter capable of being inserted to a groove bottom of the screw tooth-groove, and also being provided with a cutting edge having a quantity of axial depth of cut or more along a side-face of the fourth end mill, for performing finish machining of the bottom-face of the screw tooth-groove, wherein the first end mill, the second end mill, the third end mill and the fourth end mill are sequentially used for forming the screw tooth-groove.

11. A method of manufacturing a screw compressor, comprising:

a first assembly step of forming a screw rotor by machining a plurality of screw tooth-grooves each by means of the steps of:

drilling in a depth direction of a screw-rotor's screw tooth-groove to be by giving a constant depth of cut to a depth determined in advance, by using a first end mill;
performing rough machining of side-faces of a screw tooth-groove, by using a second end mill whose diameter is smaller than a groove width of the screw tooth-groove;
performing finish machining of the side-faces of a screw tooth-groove, by using a third end mill being furnished with a cutting-edge portion shorter than a depth size of the screw tooth-groove and with a neck portion having a smaller diameter than a diameter of the cutting-edge portion; and
performing finish machining of a bottom-face of a screw tooth-groove, by using a fourth end mill having a shape associated with the bottom-face of the screw tooth-groove, being provided with a cutting edge having a quantity of axial depth of cut or more along a side-face of the fourth end mill, and having an outer diameter less than or equal to a tool diameter capable of being inserted to a groove bottom of the screw tooth-groove;

a second assembly step of disposing the gate rotors on outer radial sides of the screw rotor so that the plurality of screw tooth-grooves of the screw rotor is individually made axially perpendicular to a plurality of teeth of two gate rotors with each other; and
a third assembly step of covering an outer circumferential portion of the screw rotor and those of the gate rotors by an enclosure, whereby the screw compressor is structured to seal a compression medium therein by closing the plurality of screw tooth-grooves by means of the gate rotors rotating together with the screw rotor concurrently with its rotation.

EP 3 357 618 A1

Fig. 1

Fig. 2

Fig. 3

X-AXIS

Y-AXIS

Z-AXIS

EP 3 357 618 A1

Fig. 4

（a）

（b）

EP 3 357 618 A1

Fig. 5

A — | TOOTH-GROOVE ROUGH MACHINING | — | GENERAL-PURPOSE END MILL |

⇩

B — | TOOTH-GROOVE SIDE-FACE ROUGH MACHINING | — | GENERAL-PURPOSE END MILL |

⇩

C — | TOOTH-GROOVE SIDE-FACE FINISH MACHINING | — | SPECIAL END MILL |

⇩

D — | TOOTH-GROOVE BOTTOM-FACE FINISH MACHINING | — | SPECIAL END MILL WITH ROUND-END SHAPE |

MACHINING PROCESS STEP        TOOL AS USED

Fig. 6

(a)

25  33

2

25

1

(b)

26

26

1

(c)

27

27

1

(d)

28

28

1

Fig. 7

29

Fig. 8

$D_1$

21

$R_3$

h

$R_4$

34

35

Fig. 9

Fig. 10

Fig. 11

Fig. 12

Fig. 13

Fig. 14

Fig. 15

Fig. 16

Fig. 17

(a)

28    33

(b)

28

+Y
+Z

(c)

28

28    1

28    1

28    1

31

Fig. 18

## GROOVE BOTTOM GEOMETRY

(b)   (c)

(a)

HEIGHT FROM GROOVE'S MIDDLE (mm)

DISTANCE FROM GROOVE BOTTOM'S MIDDLE (mm)

------- TARGET SHAPE
R95

——— φ19 TOOL'S
MIDDLE R95

- - - - HEIGHT IN
MINIMUM LEAD

- · - · HEIGHT IN
MAXIMUM LEAD

Fig. 19

## GROOVE-BOTTOM ERROR IN GEOMETRY

ERROR FROM TARGET SHAPE (mm)

DISTANCE FROM GROOVE BOTTOM'S MIDDLE (mm)

- - - - ERROR IN
MINIMUM LEAD

- · - · ERROR IN
MAXIMUM LEAD

# Fig. 20

EP 3 357 618 A1

| MACHINING PROCESS STEP | TOOL AS USED |
|---|---|
| TOOTH-GROOVE ROUGH MACHINING | GENERAL-PURPOSE END MILL |
| TOOTH-GROOVE SIDE-FACE ROUGH MACHINING | GENERAL-PURPOSE END MILL |
| TOOTH-GROOVE BOTTOM-FACE ROUGH MACHINING | GENERAL-PURPOSE BALL END MILL |
| TOOTH-GROOVE SIDE-FACE FINISH MACHINING | SPECIAL END MILL |
| TOOTH-GROOVE BOTTOM-FACE FINISH MACHINING 1 | SPECIAL END MILL OF MAXIMUM TOOL-DIAMETER WITH ROUND-END SHAPE |
| TOOTH-GROOVE BOTTOM-FACE FINISH MACHINING 2 | SPECIAL END MILL OF SMALL TOOL-DIAMETER WITH ROUND-END SHAPE |

Fig. 21

(a)

(b)

(c)

(d)

(e)

(f)

Fig. 22

**GROOVE BOTTOM GEOMETRY BY ROUGH MACHINING TOOL**

HEIGHT FROM
GROOVE'S
MIDDLE (mm)

TOOL RADIUS CAPABLE OF
BEING INSERTED

BOTTOM-FACE GEOMETRY
AFTER TOOTH-GROOVE SIDE-
FACE ROUGH MACHINING

DISTANCE FROM GROOVE BOTTOM'S MIDDLE (mm)

R8 BALL

16 × 1.5 OVAL-
SHAPED (φ16)

20 × 1.5 OVAL-
SHAPED (φ20)

TARGET SHAPE

Fig. 23

GROOVE-BOTTOM ERROR IN GEOMETRY ($\phi$8)

- - - ERROR IN MINIMUM LEAD

- · - · ERROR IN MAXIMUM LEAD

Fig. 24

GROOVE-BOTTOM ERROR IN GEOMETRY ($\phi$6)

- - - ERROR IN MINIMUM LEAD

- · - · ERROR IN MAXIMUM LEAD

Fig. 25

28

53

57

52

R

Fig. 26

GROOVE-BOTTOM ERROR IN GEOMETRY
AFTER TURNING RADIUS CORRECTION

Fig. 27

(a)

(b)

Fig. 28

## GROOVE-BOTTOM ERROR IN GEOMETRY AFTER TURNING RADIUS CORRECTION (RECIPROCATING MACHINING)

CORRECTION, LEAD MINIMUM

CORRECTION, LEAD MAXIMUM

Fig. 29

## GROOVE-BOTTOM ERROR IN GEOMETRY AFTER TURNING RADIUS OFFSET ($\phi$8)

OFFSET, LEAD MINIMUM

OFFSET, LEAD MAXIMUM

Fig. 30

## GROOVE-BOTTOM ERROR IN GEOMETRY
## AFTER TURNING RADIUS OFFSET ($\phi$6)

Y-axis: ERROR FROM TARGET SHAPE (mm)
0.02, 0.015, 0.01, 0.005, 0, -0.005, -0.01, -0.015, -0.02

X-axis: DISTANCE FROM GROOVE BOTTOM'S MIDDLE (mm)
0, 5, 10, 15

OFFSET,
LEAD MINIMUM

OFFSET,
LEAD MAXIMUM

Fig. 31

| TOOTH-GROOVE SIDE-FACE FINISH MACHINING | TIP-REPLACEABLE END MILL |
| TOOTH-GROOVE BOTTOM-FACE FINISH MACHINING | SPECIAL END MILL WITH ROUND-END SHAPE |

MACHINING PROCESS STEP          TOOL AS USED

Fig. 32

(a)

27
33
2

27
1

27
1

(b)

28

+Y
+Z

28
1

Fig. 33

$D_c$

$L_c$

$D_s$

L

Fig. 34

(a)

(b)

(c)

Fig. 35

GROOVE-BOTTOM ERROR IN GEOMETRY AFTER
CORRECTION OF TURNING CENTER POSITION

TURNING
CENTER
CORRECTION

## INTERNATIONAL SEARCH REPORT

| | International application No. |
|---|---|
| | PCT/JP2016/077300 |

**A. CLASSIFICATION OF SUBJECT MATTER**
*B23C3/32*(2006.01)i, *B23C5/10*(2006.01)i, *B23C5/12*(2006.01)i, *B23F15/08* (2006.01)i, *F04C18/16*(2006.01)i, *F04C29/00*(2006.01)i

According to International Patent Classification (IPC) or to both national classification and IPC

**B. FIELDS SEARCHED**

Minimum documentation searched (classification system followed by classification symbols)
B23C1/00-5/28, B23F15/08, F04C23/00-29/12, 18/16

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
|---|---|---|
| A | JP 2011-251377 A (Daikin Industries, Ltd.), 15 December 2011 (15.12.2011), paragraphs [0038] to [0039]; fig. 7 to 10 (Family: none) | 1-11 |
| A | JP 2009-202327 A (Mitsubishi Electric Corp.), 10 September 2009 (10.09.2009), fig. 5 to 6 & US 2009/0217528 A1 fig. 5 to 6E & CN 101518843 A | 1-11 |

| | |
|---|---|
| [×] Further documents are listed in the continuation of Box C. | [ ] See patent family annex. |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 November 2016 (22.11.16) | 06 December 2016 (06.12.16) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

International application No.

PCT/JP2016/077300

C (Continuation).  DOCUMENTS CONSIDERED TO BE RELEVANT

| Category* | Citation of document, with indication, where appropriate, of the relevant passages | Relevant to claim No. |
|---|---|---|
| A | WO 2004/089569 A1  (Mitsubishi Electric Corp.), 21 October 2004 (21.10.2004), fig. 6 & US 2006/0048360 A1 fig. 6 & US 2007/0003387 A1    & EP 1614495 A1 & CN 1697716 A | 1-11 |
| A | WO 2009/028127 A1  (Daikin Industries, Ltd.), 05 March 2009 (05.03.2009), fig. 1(A) to (C) (Family: none) | 1-11 |
| A | JP 2009-57921 A  (Daikin Industries, Ltd.), 19 March 2009 (19.03.2009), fig. 12(a) to (c) (Family: none) | 1-11 |
| A | US 6122824 A  (JENSEN, DAVID L.), 26 September 2000 (26.09.2000), fig. 6A to 6B & US 5782624 A | 1-11 |
| A | US 3932077 A  (ZIMMERN, BERNARD), 13 January 1976 (13.01.1976), fig. 5, 16, 18 & GB 1388537 A | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4659847 B

- WO 2009028127 A